# EUROPEAN PATENT SPECIFICATION

(11) **EP 3 506 679 B1**
(45) Date of publication and mention of the grant of the patent: **21.07.2021**
(21) Application number: 17854725.3
(22) Date of filing: 19.09.2017
(51) Int. Cl.: H04W 36/14, H04W 48/18

(54) **METHOD, TERMINAL, AND NETWORK SIDE DEVICE FOR CELL RESELECTION IN DIFFERENT SYSTEM**
VERFAHREN, ENDGERÄT UND NETZWERKSEITIGE VORRICHTUNG ZUR ZELLENNEUAUSWAHL IN ANDEREM SYSTEM
PROCÉDÉ, TERMINAL ET DISPOSITIF CÔTÉ RÉSEAU DESTINÉS À UNE NOUVELLE SÉLECTION DE CELLULE DANS UN SYSTÈME DIFFÉRENT

(30) Priority: 30.09.2016 CN 201610879124
(43) Date of publication of application: 03.07.2019
(73) Proprietor: Huawei Technologies Co., Ltd., Longgang District Shenzhen, Guangdong 518129 (CN)
(72) Inventor: JIN, Yinghao, Shenzhen Guangdong 518129 (CN); LI, Hong, Shenzhen Guangdong 518129 (CN); TAN, Wei, Shenzhen Guangdong 518129 (CN); HAN, Feng, Shenzhen Guangdong 518129 (CN)
(74) Representative: Pfenning, Meinig & Partner mbB
(86) International application number: PCT/CN2017/102261
(87) International publication number: WO 2018/059275

(56) References cited:
- EP-A1- 2 523 525
- WO-A1-2013/066123
- WO-A1-2015/142585
- CN-A- 1 607 856
- CN-A- 103 686 906
- CN-A- 104 144 464
- HUAWEI ET AL: "Energy conserved operation evaluation", 3GPP DRAFT; R2-165555, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051127006, Retrieved from the Internet: URL:http://www.3gpp.org/ftp/Meetings_3GPP_ SYNC/RAN2/Docs/ [retrieved on 2016-08-21]
- SONY.: 'Inter-RAT Inter-MeNB Handover in LTE - NR Tight Interworking' 3GPP TSG RAN WG 2 MEETING #95 R2-165034 26 August 2016, XP051140923
- HUAWEI: 'Discussion on LTE - NR Handover' 3GPP TSG RAN WG 2 MEETING #95 R2-165450 26 August 2016, XP051126938
- ERICSSON.: 'Mobility between LTE and NR for Inactive UEs' 3GPP TSG - RAN WG3 #93 TDOC R3-161893 26 August 2016, XP051142921
- GARDILL, M. ET AL.: 'Triggering UMTS User Equipment Inter-RAT Cell Reselection Using Noise Jammers' PROCEEDINGS OF THE 6TH GERMAN MICROWAVE CONFERENCE 16 March 2011, XP031863164
- LI, YUXUAN ET AL.: 'Signaling Reduction for inter-RAT cell reselection' PROCEEDINGS OF IC-NIDC2010 26 September 2010, pages 428 - 432, XP031818131

## Description

This application claims priority to Chinese Patent Application No. 201610879124.0, filed with the Chinese Patent Office on September 30, 2016 and entitled "INTER-RAT CELL RESELECTION METHOD, TERMINAL, AND NETWORK SIDE DEVICE".

### TECHNICAL FIELD

This application relates to the field of communications technologies, and in particular, to an inter-RAT cell reselection method, a terminal, and a network side device.

### BACKGROUND

With a growing number of mobile communications users and accompanied service bandwidth requirements, mobile communications technologies need to be continuously innovated. In an innovation process, a generation change characteristic of mobile communications is very obviously reflected, and a larger quantity of types of radio access technology (English: Radio Access Technology, RAT for short) systems are also springing up. For example, 3rd generation (namely, 3G) networks and 4th generation (namely, 4G) networks have been widely commercially used in most countries. Long Term Evolution (English: Long Term Evolution, LTE for short) is a mainstream technology of 4G networks. To enable LTE to be widely applied to enterprise-class applications, an enterprise LTE (English: enterprise LTE, eLTE for short) technology accomplishes development of 4.5G networks. Currently, there is an upsurge in studying 5th generation (namely, 5G) networks.

In 3G and 4G networks, a state of a terminal includes a connected mode (namely, Active) and an idle mode (namely, Idle). When the terminal in the idle mode moves between cells, a cell reselection is triggered. If the terminal moves between cells in different systems, an inter-system cell reselection may be triggered. For example, when the terminal moves from a cell in a 3G system to a cell in a 4G system, an inter-radio access technology (English: Inter-Radio Access Technology, Inter-RAT for short) cell reselection may occur.

In 5G networks, a new mode, to be specific, an energy conserved operation (Energy Conserved Operation, ECO) mode, different from the idle mode and the active mode is introduced. The ECO mode has the following characteristics: In the ECO mode, a data plane connection and a control plane connection between a RAN side and a core network (Core Network, CN) side are kept. A terminal side maintains session-related context information. A base station-based notification area (namely, a RAN-based notification area) exists, and the area includes one or more cells. When the terminal moves within the area, no switching is required and the movement does not need to be notified to the network side. However, the network side needs to learn of whether the terminal moves from one base station-based notification area to another base station-based notification area. When the terminal in the ECO mode moves from a cell in a 5G system to a cell in a 4.5G system, an inter-RAT cell reselection may be triggered. However, there is no ECO mode in the 4.5G network. In an existing solution, when the terminal in the ECO mode moves from a cell in a 5G system to a cell in a 4.5G system, the terminal switches from the ECO mode into the idle mode, or the terminal switches from the ECO mode to a mode close to the ECO mode in the 4.5G network. However, regardless of which solution is used, when an IRAT cell reselection is triggered because the terminal in the ECO mode is handed over from 5G to 4.5G, a large quantity of signaling overheads are consumed, and a waste of system resources is unavoidable.

EP2523525 A1 discloses that a mobile terminal (UE) is instructed to be redirected from a UMTS cell to an LTE cell by a radio control apparatus (RNC), in an overlapped area between the UMTS cell in which communication with a UMTS system is available and the LTE cell in which communication with an LTE system is available, by transmitting a connection request signal including an LTE supported identifier for indicating that the LTE system is supported to the radio control apparatus (RNC) of the UMTS system.

HUAWEI ET AL.: "Energy conserved operation evaluation", 3GPP DRAFT; R2-165555, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Gothenburg, Sweden; 20160822 - 20160826 (2016-08-21), XP051127006, proposes that UL-based UE tracking should be considered as an energy efficient way to handle mobility for energy conserved operation (ECO) mode in 5G NR system.

### SUMMARY

The present invention is as defined in the appended independent claims. Further improvements are disclosed in the appended dependent claims, the description and the figures. Embodiments of this application provide an inter-RAT cell reselection method, a terminal, and a network side device, to resolve a problem that signaling overheads are relatively high when a terminal in an ECO mode in a 5G system performs an inter-RAT cell reselection.

Specific technical solutions provided in the embodiments of this application are as follows:
According to a first aspect, an inter-RAT cell reselection method is provided. When moving from a base station in a first RAT system to a base station in a second RAT system, a terminal triggers an inter-RAT cell reselection process, and sends cause indication information to the base station in the second RAT system, to indicate nature of this cell reselection, so that the base station in the second RAT system can send signaling to instruct the terminal to perform appropriate mode switching. According to the method, when the terminal in a connected mode that is not supported by the base station in the second RAT system reselects the base station, the inter-RAT cell reselection can be implemented by using a relatively small quantity of signaling, thereby reducing signaling overheads, and avoiding a waste of system resources.

In a possible design, a first base station is located in the first radio access technology RAT system, the second base station is located in the second RAT system, the terminal is in a first connected mode when connecting to the second base station, and the first RAT system does not support the first connected mode. The method includes: sending, by the terminal, a first request message to the first base station, where the first request message carries first cause indication information, and the first cause indication information indicates that the terminal needs to perform a cell reselection process from the second base station to the first base station; and receiving, by the terminal, an acknowledgement returned by the first base station for the first request message, and switching the first connected mode into a second connected mode based on the acknowledgement, where the first RAT system supports the second connected mode. Signaling in this method procedure is simple. Therefore, a cell reselection between different systems supporting different connected modes can be implemented by using a relatively small quantity of signaling overheads. It should be noted that the second base station is a base station in the second RAT system rather than the last base station on which the terminal camps before the terminal enters the first base station.

In a possible design, the first request message is an RRC connection request message, and the acknowledgement is an RRC connection rejection message; or the first request message is a cell update request message, and the acknowledgement is a cell update response message; or the first request message is an RRC connection resume message, and the acknowledgement is an RRC connection resume response message. A larger quantity of possible signaling is provided to carry the cause indication information, thereby expanding diversity of manners in which the inter-RAT cell reselection can be implemented.

In a possible design, the acknowledgement includes information about a timer; and the switching, by the terminal, the first connected mode into a second connected mode based on the acknowledgement is implemented in the following manner: starting, by the terminal, timing of the timer based on the information about the timer; and when the timer times out, releasing a context of a connection relationship between the terminal and the second base station, and switching the first connected mode into the second connected mode. This helps the terminal rapidly establish a connection when reselecting the second base station again within a period, to rapidly restore the first connected mode, thereby reducing the signaling overheads.

In a possible design, the acknowledgement does not include the information about the timer, and after receiving the acknowledgement, the terminal immediately switches the first connected mode into the second connected mode.

In a possible design, before the switching, by the terminal, the first connected mode into a second connected mode based on the acknowledgement, if the terminal triggers the cell reselection process from the first base station to the second base station when the timer does not time out, the terminal sends a second request message to the second base station. The second request message carries second cause indication information, and the second cause indication information indicates that the terminal reselects, when the timer does not time out, to connect to the second base station. The second cause indication information is carried to indicate, to the second base station, that an objective of this reselection is to reselect, when the timer does not time out, to connect to the second base station, so that the second base station can remain the terminal in the first connected mode instead of switching the first connected mode to another connected mode.

In a possible design, the first request message further carries tracking area TA indication information, and the TA indication information is used to indicate whether the first base station needs to trigger a TA update process. In this way, after the terminal reselects the first base station, the tracking area update process may be omitted when the process is not required, thereby reducing a large quantity of signaling overheads on a core network side.

In a possible design, the first connected mode is an energy conserved operation ECO mode, and the second connected mode is an idle Idle mode.

According to a second aspect, an inter-RAT cell reselection method is provided. A base station in a first RAT system receives a request message carrying cause indication information that is sent by a terminal, and determines, based on the cause indication information, that nature of sending the request message by the terminal this time is an inter-RAT cell reselection, and the base station in the first RAT system does not support a connected mode of the terminal in a base station on which the terminal recently camps, so that the base station in the first RAT system returns an indication message, to instruct to switch the connected mode of the terminal into a connected mode supported by the base station in the first RAT system. In this way, the inter-RAT cell reselection can be implemented by using a relatively small quantity of signaling, thereby reducing signaling overheads, and avoiding a waste of system resources.

In a possible design, a first base station is located in the first radio access technology RAT system, the second base station is located in the second RAT system, the terminal is in a first connected mode when connecting to the second base station, and the first RAT system does not support the first connected mode. The first base station receives a first request message sent by the terminal, and determines, based on first cause indication information carried in the first request message, that the terminal needs to perform a cell reselection process from the second base station to the first base station; and the first base station returns an acknowledgement for the first request message to the terminal, to instruct the terminal to switch the first connected mode into a second connected mode. The first RAT system supports the second connected mode. Signaling in this method procedure is simple. Therefore, a cell reselection between different systems supporting different connected modes can be implemented by using a relatively small quantity of signaling overheads.

In a possible design, the receiving, by the first base station, a first request message sent by the terminal and the returning an acknowledgement for the first request message to the terminal may be implemented in the following manners: receiving, by the first base station, a Radio Resource Control RRC connection request message sent by the terminal, and returning an RRC connection rejection message to the terminal; or receiving, by the first base station, a cell update request message sent by the terminal, and returning a cell update response message to the terminal; or receiving, by the first base station, an RRC resume message sent by the terminal, and returning an RRC resume response message to the terminal. A larger quantity of possible signaling is provided to carry the cause indication information, thereby expanding diversity of manners in which the inter-RAT cell reselection can be implemented.

In a possible design, after the determining, by the first base station, that the terminal needs to perform a cell reselection process from the second base station to the first base station and before the returning an acknowledgement for the first request message to the terminal, the first base station notifies the second base station of a terminal location change message, and receives a response message that carries information about a timer and that is sent by the second base station; and the first base station adds the information about the timer to the acknowledgement for the first request message, and returns the acknowledgement to the terminal. The information about the timer is used to instruct the terminal to release, when the timer times out, a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

In a possible design, if no direct interface exists between the first base station and the second base station, the first base station notifies the second base station of the terminal location change message by using a core network, and receives the response message that carries the information about the timer and that is sent by the second base station by using the core network. Various application scenarios are considered, so that the method in this application is more widely applicable.

According to a third aspect, an inter-RAT cell reselection method is provided. The method is applied to a second base station. A first base station is located in a first radio access technology RAT system, the second base station is located in a second RAT system, a terminal is connected to the second base station, a connected mode of the terminal is a first connected mode, and the first RAT system does not support the first connected mode of the terminal and supports a second connected mode of the terminal. The method is implemented by using the following manner: receiving, by the second base station, a terminal location update indication sent by the first base station, where the terminal location update indication is used to indicate that the terminal needs to perform a cell reselection process from the second base station to the first base station; returning, by the second base station, a response message for the terminal location update indication to the first base station, and starting a first timer; and instructing, by the second base station when the first timer times out, a core network to release a bearer of the terminal, where the response message includes information about a second timer, timeout duration of the second timer is determined by timeout duration of the first timer, and the second timer is configured to: instruct the terminal to release, when the second timer times out, a context of a connection relationship between the terminal and the second base station, and switch the first connected mode into the second connected mode. In this way, a waste of signaling overheads caused by repeated cell reselections because the terminal repeatedly moves between the first base station and the second base station after the terminal triggers the cell reselection from the second base station to the first base station is avoided. The method helps the terminal rapidly establish a connection when reselecting the second base station again within a period, to rapidly restore the first connected mode, thereby reducing the signaling overheads.

In a possible design, if the second base station receives a connection request message of the terminal when the first timer does not time out, the second base station determines, based on cause indication information carried in the connection request message, that the terminal reselects, when the second timer does not time out, to connect to the second base station, so that the second base station returns a response message for the connection request message to the terminal, to indicate that the terminal is in the first connected mode. The second base station determines, by using the second cause indication information carried in the connection request message sent by the terminal, that an objective of this reselection of the terminal is to reselect, when the second timer does not time out, to connect to the second base station, so that the second base station can remain the terminal in the first connected mode instead of switching the first connected mode to another connected mode.

In a possible design, the first connected mode is an energy conserved operation ECO mode, and the second connected mode is an idle Idle mode.

According to a fourth aspect, a terminal is provided. The terminal has a function of implementing a behavior of the terminal according to any one of the first aspect and the possible designs of the first aspect. The function may be implemented by using hardware, or may be implemented by hardware executing corresponding software. The hardware or software includes one or more modules corresponding to the foregoing function.

In a possible design, the terminal includes: a sending unit, configured to send a first request message to a first base station, where the first request message carries first cause indication information, and the first cause indication information indicates that the terminal needs to perform a cell reselection process from a second base station to the first base station; a receiving unit, configured to: after the sending unit sends the first request message, receive an acknowledgement returned by the first base station for the first request message; and a conversion unit, configured to switch the first connected mode into a second connected mode based on the acknowledgement received by the receiving unit, where the first RAT system supports the second connected mode. The first base station is located in the first radio access technology RAT system, the second base station is located in a second RAT system, the terminal is in the first connected mode when connecting to the second base station, and the first RAT system does not support the first connected mode. In this way, the inter-RAT cell reselection can be implemented by using a relatively small quantity of signaling, thereby reducing signaling overheads, and avoiding a waste of system resources.

In a possible design, the first request message is a Radio Resource Control RRC connection request message, and the acknowledgement is an RRC connection rejection message; or the first request message is a cell update request message, and the acknowledgement is a cell update response message; or the first request message is an RRC connection resume message, and the acknowledgement is an RRC connection resume response message. A larger quantity of possible signaling is provided to carry the cause indication information, thereby expanding diversity of manners in which the inter-RAT cell reselection can be implemented.

In a possible design, the acknowledgement includes information about a timer; and the conversion unit is configured to: start timing of the timer based on the information about the timer; and when the timer times out, release a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

In a possible design, the terminal further includes a triggering unit, configured to: before the conversion unit switches the first connected mode into the second connected mode based on the acknowledgement, trigger the cell reselection process from the first base station to the second base station when the timer does not time out; and the sending unit is further configured to: when the triggering unit triggers the cell reselection process from the first base station to the second base station, send a second request message to the second base station. The second request message carries second cause indication information, and the second cause indication information indicates that the terminal reselects, when the timer does not time out, to connect to the second base station. The second cause indication information is carried to indicate, to the second base station, that an objective of this reselection is to reselect, when the timer does not time out, to connect to the second base station, so that the second base station can remain the terminal in the first connected mode instead of switching the first connected mode to another connected mode.

In a possible design, the first request message further carries tracking area TA indication information, and the TA indication information is used to indicate whether the first base station needs to trigger a TA update process. In this way, after the terminal reselects the first base station, the tracking area update process may be omitted when the process is not required, thereby reducing a large quantity of signaling overheads on a core network side.

In a possible design, the first connected mode is an energy conserved operation ECO mode, and the second connected mode is an idle Idle mode.

According to a fifth aspect, a network side device is provided. The network side device has a function of implementing a behavior of the first base station according to any one of the second aspect and the possible designs of the second aspect. The function may be implemented by using hardware, or may be implemented by hardware executing corresponding software. The hardware or software includes one or more modules corresponding to the foregoing function.

In a possible design, the network side device is a first base station. The network side device includes: a receiving unit, configured to receive a first request message sent by a terminal; a determining unit, configured to determine, based on first cause indication information carried in the first request message received by the receiving unit, that the terminal needs to perform a cell reselection process from a second base station to the first base station, where the first base station is located in a first radio access technology RAT system, the second base station is located in a second RAT system, the terminal is in a first connected mode when connecting to the second base station, and the first RAT system does not support the first connected mode; and a sending unit, configured to return an acknowledgement for the first request message to the terminal, to instruct the terminal to switch the first connected mode into a second connected mode, where the first RAT system supports the second connected mode. In this way, the inter-RAT cell reselection can be implemented by using a relatively small quantity of signaling, thereby reducing signaling overheads, and avoiding a waste of system resources.

In a possible design, the receiving unit and the sending unit are specifically configured to: the receiving unit receives a Radio Resource Control RRC connection request message sent by the terminal, and the sending unit returns an RRC connection rejection message to the terminal; or the receiving unit receives a cell update request message sent by the terminal, and the sending unit returns a cell update response message to the terminal; or the receiving unit receives an RRC resume message sent by the terminal, and the sending unit returns an RRC resume response message to the terminal. In this way, a larger quantity of possible signaling is provided to carry the cause indication information, thereby expanding diversity of manners in which the inter-RAT cell reselection can be implemented.

In a possible design, the receiving unit and the sending unit are further configured to: after the determining unit determines that the terminal needs to perform the cell reselection process from the second base station to the first base station, and before the sending unit returns the acknowledgement for the first request message to the terminal, the sending unit notifies the second base station of a terminal location change message, and the receiving unit receives a response message that carries information about a timer and that is sent by the second base station; and the sending unit is specifically configured to: add the information about the timer to the acknowledgement for the first request message, and return the acknowledgement to the terminal. The information about the timer is used to instruct the terminal to release, when the timer times out, a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

In a possible design, if no direct interface exists between the first base station and the second base station, the sending unit is further configured to notify the second base station of the terminal location change message by using a core network, and the receiving unit is further configured to receive the response message that carries the information about the timer and that is sent by the second base station by using the core network. Various application scenarios are considered, so that the method in this application is more widely applicable.

According to a sixth aspect, a network side device is provided. The network side device is a second base station, a first base station is located in a first radio access technology RAT system, the second base station is located in a second RAT system, a terminal is connected to the second base station, a connected mode of the terminal is a first connected mode, and the first RAT system does not support the first connected mode of the terminal and supports a second connected mode of the terminal. The network side device includes: a receiving unit, configured to receive a terminal location update indication sent by the first base station, where the terminal location update indication is used to indicate that the terminal needs to perform a cell reselection process from the second base station to the first base station; a sending unit, configured to: after the receiving unit receives the terminal location update indication, return a response message for the terminal location update indication to the first base station; a timing unit, configured to: after the receiving unit receives the terminal location update indication, start a first timer. The sending unit is further configured to: when the first timer recorded by the timing unit times out, instruct a core network to release a bearer of the terminal. The response message includes information about a second timer, timeout duration of the second timer is determined by timeout duration of the first timer, and the second timer is configured to: instruct the terminal to release, when the second timer times out, a context of a connection relationship between the terminal and the second base station, and switch the first connected mode into the second connected mode. In this way, a waste of signaling overheads caused by repeated cell reselections because the terminal repeatedly moves between the first base station and the second base station after the terminal triggers the cell reselection from the second base station to the first base station is avoided. The method helps the terminal rapidly establish a connection when reselecting the second base station again within a period, to rapidly restore the first connected mode, thereby reducing the signaling overheads.

In a possible design, the receiving unit is further configured to: when the first timer does not time out, receive a connection request message of the terminal. The network side device further includes a determining unit, configured to: after the receiving unit receives the connection request message of the terminal, determine, based on cause indication information carried in the connection request message, that the terminal reselects, when the second timer does not time out, to connect to the second base station. The sending unit is further configured to return a response message for the connection request message to the terminal, to indicate that the terminal is in the first connected mode. The second base station determines, by using the second cause indication information carried in the connection request message sent by the terminal, that an objective of this reselection of the terminal is to reselect, when the second timer does not time out, to connect to the second base station, so that the second base station can remain the terminal in the first connected mode instead of switching the first connected mode to another connected mode.

In a possible design, the first connected mode is an energy conserved operation ECO mode, and the second connected mode is an idle Idle mode.

### BRIEF DESCRIPTION OF DRAWINGS

FIG. 1 is a diagram of a system architecture to which an embodiment of this application is applied;
FIG. 2 is a first flowchart of an inter-RAT cell reselection method according to an embodiment of this application;
FIG. 3 is a structural diagram of a 3G network and a 4G network in the prior art;
FIG. 4a and FIG. 4b are structural diagrams of a 4.5G/4G network and a 5G network in the prior art;
FIG. 5 is a first schematic diagram of inter-RAT cell reselection signaling according to an embodiment of this application;
FIG. 6 is a second schematic diagram of inter-RAT cell reselection signaling according to an embodiment of this application;
FIG. 7 is a third schematic diagram of inter-RAT cell reselection signaling according to an embodiment of this application;
FIG. 8 is a fourth schematic diagram of inter-RAT cell reselection signaling according to an embodiment of this application;
FIG. 9 is a fifth schematic diagram of inter-RAT cell reselection signaling according to an embodiment of this application;
FIG. 10 is a sixth schematic diagram of inter-RAT cell reselection signaling according to an embodiment of this application;
FIG. 11 is a first schematic structural diagram of a terminal according to an embodiment of this application;
FIG. 12 is a first schematic structural diagram of a network side device according to an embodiment of this application;
FIG. 13 is a second schematic structural diagram of a network side device according to an embodiment of this application;
FIG. 14 is a second schematic structural diagram of a terminal according to an embodiment of this application;
FIG. 15 is a third schematic structural diagram of a network side device according to an embodiment of this application; and
FIG. 16 is a fourth schematic structural diagram of a network side device according to an embodiment of this application.

### DESCRIPTION OF EMBODIMENTS

To make the objectives, technical solutions, and advantages of this application clearer, the following further describes this application in detail with reference to the accompanying drawings. Apparently, the described embodiments are merely some rather than all of the embodiments of this application. All other embodiments obtained by persons of ordinary skill in the art based on the embodiments of this application without creative efforts shall fall within the protection scope of this application.

In view of a problem in the prior art that signaling overheads are relatively high when a terminal in an ECO mode in a 5G system performs an inter-RAT cell reselection, embodiments of this application provide an inter-RAT cell reselection method, a terminal, and a network side device. When the terminal in a first connected mode performs a cell reselection process from a base station in the 5G system to a base station in a 4.5G system or a 4G system (which is denoted as a 4.5G/4G system), because the base station in the 4.5G/4G system does not support the first connected mode, the terminal sends a message carrying cause indication information to the base station in the 4.5G/4G system, to indicate nature of this cell reselection to the base station in the 4.5G/4G system by using the cause indication information. In this way, the base station in the 4.5G/4G system can send signaling to instruct the terminal to perform appropriate mode switching. According to the method, when the terminal in a connected mode that is not supported by the base station in the 4.5G/4G system reselects the base station, the inter-RAT cell reselection can be implemented by using a relatively small quantity of signaling, thereby reducing signaling overheads, and avoiding a waste of system resources.

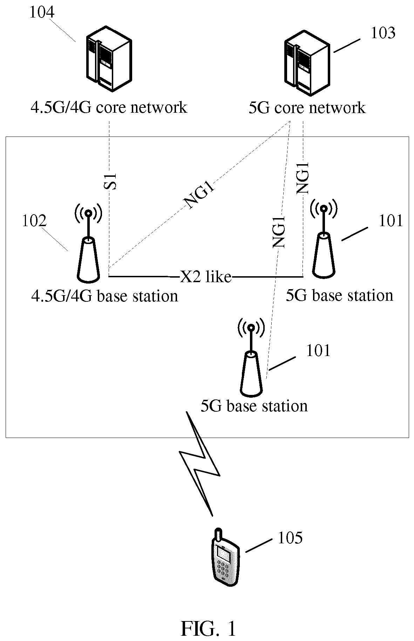

As shown in FIG. 1, a system architecture to which an embodiment of this application is applied includes a base station 101 in a 5G system, a base station 102 in a 4.5G/4G system, a core network 103 in the 5G system, a core network 104 in the 4.5G/4G system, and a terminal 105. The base station 101 in the 5G system and the base station 102 in the 4.5G/4G system are apparatuses that are deployed in a radio access network and that are configured to provide a wireless communication function to the terminal. The base station 101 in the 5G system and the base station 102 in the 4.5G/4G system may include various forms of macro base stations, micro base stations, relay stations, access points, and the like. The radio access network may be applied to systems having different radio access technologies, for example, a Long Term Evolution (Long Term Evolution, LTE) system, a 4.5G system, a 5G system, and more possible communications systems. A direct interface, such as an X2-like (X2-like) may exist, or no direct interface may exist between the base station 101 in the 5G system and the base station 102 in the 4.5G/4G system. The base station 102 in the 4.5G/4G system is connected to the core network 104 in the 4.5G/4G system by using an S1 interface, the base station 101 in the 5G system is connected to the core network 103 in the 5G system by using an NG1 interface, and the base station 102 in the 4.5G/4G system may further be connected to the core network 103 in the 5G system by using the NG1 interface. The terminal 102 may include various handheld devices, in-vehicle devices, wearable devices, computing devices, or other processing devices connected to a wireless modem that have a wireless communication function, and various forms of user equipments (User Equipment, UE), mobile stations (Mobile Station, MS), and terminal devices (terminal device). The terminal 102 may wirelessly communicate with the base station 101 in the 5G system and the base station 102 in the 4.5G/4G system.

Inter-RAT refers to different RAT systems, to be specific, inter-RAT. Inter-RAT mobility of the terminal means that the terminal performs a cell reselection between different systems. When connected modes of the terminal that are supported by the different systems are different, and the terminal moves from one RAT system to another RAT system, the connected mode of the terminal is switched, to be specific, the connected mode of the terminal is switched to a connected mode supported by the another RAT system. An application scenario in this embodiment of this application is inter-RAT mobility of the terminal when the connected modes of the terminal that are supported by the different systems are different.

The inter-RAT cell reselection method arid the apparatus provided in the embodiments of this application are described below in detail with reference to the accompanying drawings.

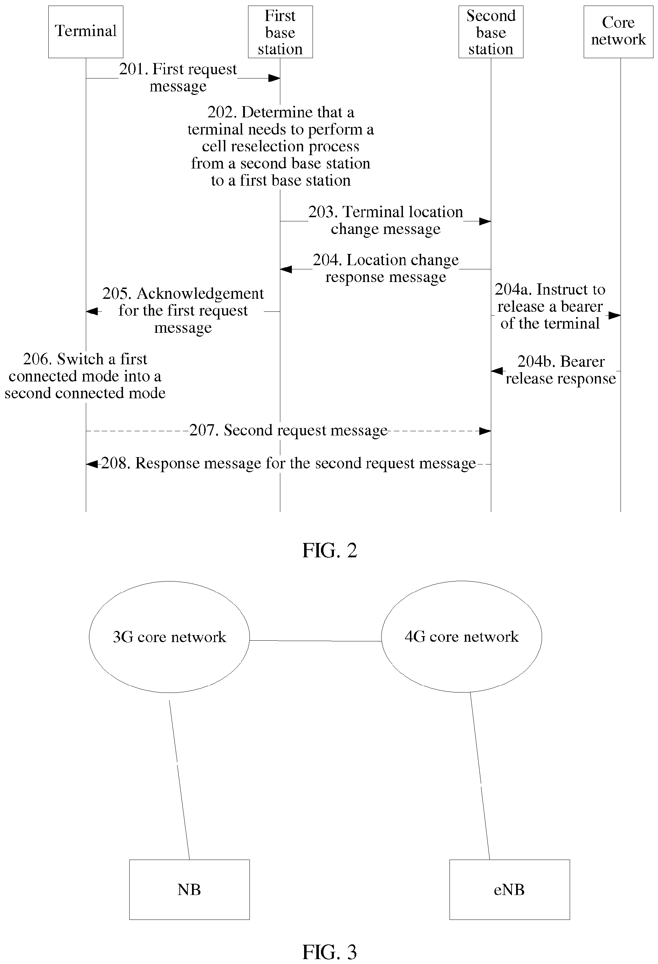

For ease of description, it is assumed that two RAT systems in different systems are respectively referred to as a first RAT system and a second RAT system, a base station in the first RAT system is referred to as a first base station, a base station in the second RAT system is referred to as a second base station, the terminal is initially connected to the second base station, the terminal is in a first connected mode when connecting to the second base station, and the first RAT system does not support the first connected mode and supports a second connected mode. Optionally, when the terminal is in the first connected mode and the second connected mode, the terminal does not send channel state information (English: Channel State Information, CSI for short) to the base station. When the terminal is in the first connected mode, a network side remains a data plane connection and a control plane connection between the base station and a core network. When moving from the second base station to the first base station, the terminal triggers a cell reselection process. The cell reselection process triggered by the terminal is described below in detail with reference to FIG. 2.

A possible system architecture to which an inter-RAT cell reselection method according to an embodiment of this application is applied may be the architecture shown in FIG. 1, the first RAT system is the 4.5G/4G system, the second RAT system is the 5G system, the first base station is the base station 102 in the 4.5G/4G system, the second base station is the base station 101 in the 5G system, and the terminal is the terminal 105.

As shown in FIG. 2, in this embodiment of this application, a procedure of the inter-RAT cell reselection method is as follows:
Step 201: The terminal sends a first request message to the first base station, and the first base station receives the first request message sent by the terminal.

The first request message carries cause indication information (Cause). For ease of description, the cause indication information carried in the first request message is denoted as first cause indication information herein, and the first cause indication information indicates that the terminal needs to perform a cell reselection process from the second base station to the first base station. To be specific, the Cause is carried to indicate that a cause of this initiation of the first request message is that the first base station is reselected from the second base station.

Step 202: The first base station determines, based on first cause indication information carried in the first request message, that the terminal needs to perform a cell reselection process from the second base station to the first base station.

Step 203: The first base station sends a terminal location change message to the second base station, and the second base station receives the terminal location change message sent by the first base station.

A terminal location update indication is used to indicate that the terminal needs to perform the cell reselection process from the second base station to the first base station.

Step 204: Optionally, the second base station returns a response message for the terminal location change message to the first base station, and the first base station receives a location change response message sent by the second base station.

Optionally, the second base station starts a first timer, and adds information about a second timer to the location change response message. In this case, after step 204, the procedure may further include step 204a and step 204b.

Step 204a: The second base station instructs, when a first timer times out, a core network to release a bearer of the terminal, and the core network receives a notification for releasing the bearer of the terminal that is sent by the second base station.

Step 204b: The core network returns a bearer release response to the second base station, and the second base station receives the bearer release response sent by the core network.

Timeout duration of the second timer is determined by timeout duration of the first timer. Optionally, the timeout duration of the second timer = the timeout duration of the first timer - duration in which the second base station sends signaling to the first base station - duration in which the first base station sends signaling to the terminal.

Step 205: The first base station returns an acknowledgement for the first request message to the terminal, to instruct the terminal to switch a first connected mode into a second connected mode; and the terminal receives the acknowledgement returned by the first base station for the first request message.

The first base station adds the information about the second timer to the acknowledgement. The second timer is configured to: after receiving the acknowledgement, instruct the terminal to start the second timer; and when the second timer does not time out, maintain a context of a connection relationship between the terminal and the second base station; or when the second timer times out, release a context of a connection relationship between the terminal and the second base station, and switch the first connected mode into the second connected mode.

Step 206: The terminal switches the first connected mode into the second connected mode based on the received acknowledgement.

Optionally, if the acknowledgement includes the information about the second timer, the terminal starts the second timer for timing; and when the second timer does not time out, maintains the context of the connection relationship between the terminal and the second base station; or when the second timer times out, releases the context of the connection relationship between the terminal and the second base station, and switches the first connected mode into the second connected mode.

After receiving the terminal location update indication, the second base station respectively instructs the terminal and a core network side to maintain the context for a period instead of immediately releasing the context of the connection relationship between the second base station and the terminal, because this helps the terminal rapidly establish a connection when reselecting the second base station again within a period, and reduce signaling overheads. Specifically, the terminal starts the second timer for timing based on the acknowledgement, and when the second timer does not time out, the terminal reselects the second base station. For a specific process, refer to step 207 and step 208.

Step 207: The terminal triggers a cell reselection process to the second base station, and determines, when a second timer does not time out, to send a second request message to the second base station, and the second base station receives the second request message sent by the terminal.

The second request message is a connection request message sent by the terminal to the second base station. The second request message carries second cause indication information, and the second cause indication information indicates that the terminal reselects, when the second timer does not time out, to connect to the second base station.

Step 208: When determining that the first timer does not time out, the second base station returns a response message for the second request message to the terminal, and the terminal receives the response message for the second request message returned by the second base station.

When the second timer does not time out, the terminal does not switch the first connected mode into the second connected mode and is in the first connected mode, and maintains the context of the connection relationship between the terminal and the second base station. Therefore, when receiving the second request message, the second base station may instruct the terminal to still remain in the first connected mode, and the terminal may further rapidly establish a connection to the second base station. Certainly, when the connected mode of the terminal needs to be switched into another connected mode because the terminal has a service requirement, the second base station may further instruct the terminal to perform appropriate connected mode switching.

An application scenario of this embodiment of this application is that the first RAT system is a 4.5G/4G system, and the second RAT system is a 5G system. In this scenario, preferably, the first connected mode is an ECO mode, and the second connected mode is an idle mode.

After the terminal reselects the second base station when the first timer and the second timer do not time out, if determining that the terminal does not need to send data in this case, the second base station continues to remain the terminal in the ECO mode based on the second cause indication information; or if determining that the terminal needs to send data in this case, the second base station instructs the terminal to switch the ECO mode into an active mode.

Optionally, the first request message may be an RRC connection request message, and the acknowledgement is an RRC connection rejection message; or the request message is a cell update request message, and the acknowledgement is a cell update response message; or the request message is an RRC resume message, and the acknowledgement is an RRC resume response message. Certainly, the first request message may alternatively be another signaling message. This is not limited in this embodiment of this application.

In addition, as shown in FIG. 3, there is no direct interface between a base station NB in a 3G system and a base station eNB in a 4G system, but an interface exists between a core network in the 3G system and a core network in the 4G system. When the terminal moves from a cell in the 3G system to a cell in the 4G system, a tracking area update (Tracking Area Update, TAU) process is triggered. In the TAU process, the core network in the 4G system in which the cell to which the terminal currently moves is located may obtain a context of the terminal from the core network in the 3G system in which the terminal is originally located. In the TAU process, a core network side needs to consume a large quantity of signaling overheads.

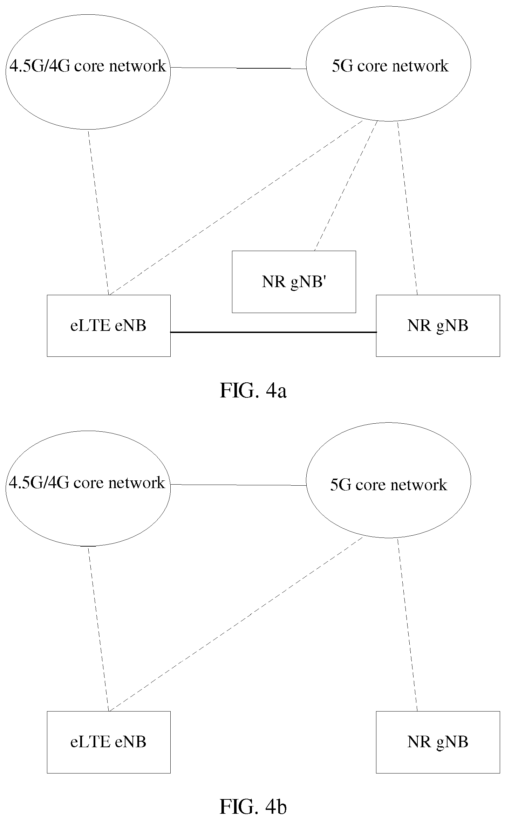

However, as shown in FIG. 4a, an X2-like interface may exist between a base station eLTE eNB in a 4.5G/4G system and a base station NR gNB in a 5G system. In addition, the eLTE eNB and the NR gNB may further be connected to a same core network in the 5G system. Therefore, the base station eLTE eNB in the 4.5G/4G system and the base station NR gNB in the 5G system may share a tracking area, to be specific, when the terminal moves from a cell in the 5G system to a cell in the 4.5G/4G system, the TAU process may not need to be triggered. Therefore, the large quantity of signaling overheads on the core network side can be reduced.

Therefore, in this embodiment of this application, to further reduce the signaling overheads, the first request message further carries TA indication information. The TA indication information is used to indicate whether a TA to which the terminal in the second base station belongs is the same as a TA to which the first base station belongs. To be specific, the TA indication information may indicate whether the first base station needs to trigger the TA update process. Based on the TA indication information, when different systems share a core network, a cell update process on a core network layer does not need to be performed, thereby reducing unnecessary signaling overheads.

However, as shown in FIG. 4b, alternatively, no direct interface may exist between the first base station and the second base station, to be specific, no X2-like interface exists. In this case, the first base station notifies the second base station of the terminal location change message by using the core network, and receives the response message carrying the information about the timer that is sent by the second base station by using the core network, and broadcasts another signaling message by using the core network.

According to the foregoing embodiment, an embodiment of this application further designs another inter-RAT cell reselection method. To be specific, before reselecting the first base station, the terminal sends signaling to the second base station, and the second base station is notified, by using cause indication information in the signaling, that the terminal performs an inter-RAT cell reselection. In this way, the second base station may perform cell reselection processing of the terminal by directly using the signaling message sent by the terminal, so that inter-RAT mobility of the terminal can be implemented by using a smaller quantity of signaling.

This embodiment of this application is further described below in detail with reference to a specific application scenario shown in FIG. 4a. It is assumed that the first RAT system is a 4.5G/4G system, the second RAT system is a 5G system, the first connected mode is an ECO mode, the second connected mode is an idle mode, a base station in the 4.5G/4G system is an eLTE eNB, which is referred to as eNB for short below, and a base station in the 5G system is an NR gNB, which is referred to as gNB for short below. The terminal is initially connected to the gNB and is in the ECO mode. When moving to the eNB, the terminal triggers an inter-RAT cell reselection.

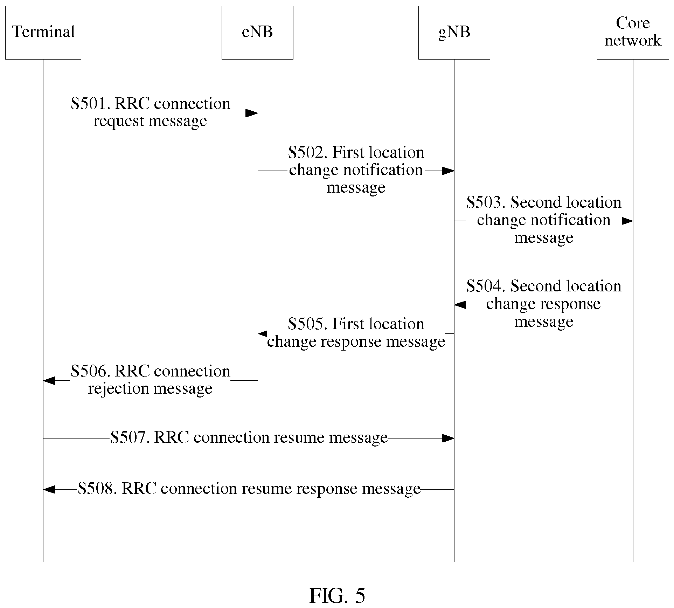

Referring to FIG. 5, when the terminal in the ECO mode moves from the gNB to the eNB, a signaling transmission process of the triggered inter-RAT cell reselection is as follows.

S501: The terminal sends an RRC connection request message (RRC Connection Request) to the eNB, and The eNB receives the RRC connection request message sent by the terminal.

The RRC connection request message carries cause indication information, TA indication information, a terminal identity (English: Identity, ID for short), a source base station (Source Node Base Station, SNB) ID, and a core network ID.

The cause indication information is used to indicate that a cause for sending the RRC connection request message is that the terminal is switched from the gNB to the eNB. The cause indication information further indicates that the terminal is originally in the ECO mode rather than the idle mode, because the terminal in the idle mode does not add the cause indication information when sending the RRC connection request message. The TA indication information indicates whether a TA in which the terminal before the cell reselection is located is the same as a TA to which the eNB which the terminal currently needs to access belongs. The TA indication information may be 1-bit information that directly indicates whether the TA is changed, or may specifically indicate a value of a TA on which the terminal previously camps, or both of them may be included. The terminal ID indicates identity information of the terminal. The terminal ID may be ID information allocated by the gNB to the terminal, or may be a temporary mobile subscriber identity (Temporary Mobile Station Identifier, TMIS), or may be an international mobile subscriber identity (International Mobile Subscriber Identity, IMSI). The SNB ID indicates information about a base station on which the terminal recently camps, namely, a gNB ID. The eNB can find the gNB by using information about the SNB ID. It should be noted that if the terminal ID is the ID information allocated by the gNB to the terminal and information about the terminal ID may be used to indicate an SNB, the terminal may not add the SNB ID to the RRC connection request message. Information about the core network ID is used to indicate information about a core network on which the terminal previously camps.

If the eNB determines, based on the TA indication information, that the TA is not changed, a TAU process is not performed.

S502: The eNB sends a first terminal location change notification message (UE Location Change Notify) to the gNB, and the gNB receives the first location change notification message sent by the eNB.

The eNB adds the terminal ID to the first location change notification message.

S503: The gNB sends a second terminal location change notification message to the core network, and the core network receives the second location change notification message sent by the gNB.

The gNB adds the terminal ID and an eNB ID to the second location change notification message.

Specifically, two optional manners of sending the second terminal location change notification message by the gNB to the core network are: After the gNB receives the first location change notification message sent by the eNB, the gNB immediately sends the second terminal location change notification message to the core network. Alternatively, after waiting T1 duration, the gNB sends the second terminal location change notification message to the core network.

S504: After receiving the second terminal location change notification message, the core network disconnects a connection between a gNB side and a core network side, deletes a context of the connection between the gNB side and the core network side, and sends a second location change response message for the second location change notification message to the gNB, and the gNB receives the second terminal location change response message returned by the core network.

S505: Optionally, the gNB returns a first terminal location change response message (UE Location Change Response) to the eNB.

The gNB adds information about a timer to the first location change response message.

S506: After receiving the first terminal location change response message returned by the gNB, the eNB sends an RRC connection rejection message (RRC Connection Rejection) to the terminal, and the terminal receives the RRC connection rejection message sent by the eNB.

The RRC connection rejection message carries the information about the timer. Timeout duration T2 of the timer is used in cooperation with the wait duration T1 for sending the second location change notification message by the gNB to the core network. Optionally, T2 and T1 may be configured to enable a moment at which the core network receives the second location change notification message sent by the gNB to be the same as a timeout moment of the timer that is set by the terminal.

After receiving the RRC connection rejection message, the terminal starts timing of the timer. When the timer times out, the terminal switches the connected mode from the ECO mode into the idle mode.

If the RRC connection rejection message received by the terminal does not carry the information about the timer, the terminal may immediately switch the connected mode from the ECO mode into the idle mode.

If the timer does not time out, the terminal moves from the eNB to the gNB again, so that S507 is performed.

S507: The terminal sends an RRC connection resume (RRC Connection Resume) message to the gNB, and the gNB receives the RRC connection resume message sent by the terminal.

The RRC connection resume message carries the cause indication information used to indicate that after the inter-RAT cell reselection, the terminal reselects the gNB again. The RRC connection resume message may further carry information such as the terminal ID.

S508: The gNB sends an RRC connection resume response message (RRC Connection Suspend) to the terminal, and the terminal receives the RRC connection resume response message sent by the gNB.

Because the timer does not exceed the duration T2, the terminal does not release a context of a connection between the terminal and the gNB, the gNB does not reach the wait duration T1, and the gNB does not release a context of the connection between the gNB and the terminal, the terminal may rapidly return to the ECO mode.

However, if the terminal needs to send data, the gNB further instructs the terminal to switch the ECO mode into the active mode.

In conclusion, it can be learned from the signaling transmission process of the inter-RAT cell reselection shown in FIG. 5 that, the inter-RAT cell reselection can be implemented by using a relatively small quantity of signaling, thereby effectively reducing signaling overheads. Further, the gNB sets the wait duration and use of the timer, so that when reselecting the gNB within a period, the terminal may rapidly access the gNB, and rapidly resume an original connected mode, thereby avoiding a waste of signaling overheads caused by repeated mode switching when the terminal repeatedly moves between the gNB and the eNB.

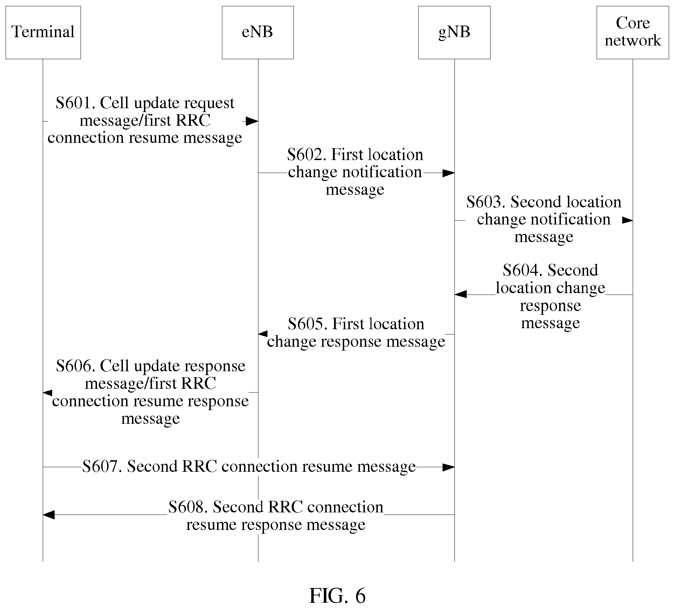

Based on an invention concept and an application scenario the same as those in FIG. 5, referring to FIG. 6, when the terminal in the ECO mode moves from the gNB to the eNB, a signaling transmission process of a triggered inter-RAT cell reselection may alternatively as follows.

S601: The terminal sends a cell update request message (Cell Update Request) or a first RRC connection resume message to the eNB, and the eNB receives the cell update request message or the first RRC connection resume message sent by the terminal.

The cell update request message or the first RRC connection resume message carries a terminal ID. Optionally, The cell update request message or the first RRC connection resume message may further carry cause indication information, TA indication information, an SNB ID, and a core network ID. The cause indication information only needs to indicate whether the cell update request is an inter-RAT cell reselection or an intra-system cell reselection.

A process of S602 to S605 is similar to a process of S502 to S505, and repetitions are not described herein again.

S606: After receiving a first terminal location change response message returned by the gNB, the eNB sends a cell update response message (Cell Update Response) or a first RRC connection resume response message to the terminal. The cell update response message or the first RRC connection resume response message carries the information about the timer. The terminal receives the cell update response message or the first RRC connection resume response message sent by the eNB.

After receiving the cell update response message sent by the eNB, the terminal starts timing of the timer. When the timer reaches duration T2, the terminal switches the connected mode from the ECO mode into the idle mode.

If an RRC connection rejection message received by the terminal does not carry the information about the timer, the terminal may immediately switch the connected mode from the ECO mode into the idle mode.

Similarly, if the timer does not reach the duration T2, the terminal moves from the eNB to the gNB again, so that S607 is performed.

S607: The terminal sends a second RRC connection resume message to the gNB, and the gNB receives the second RRC connection resume message sent by the terminal.

The second RRC connection resume message carries the cause indication information used to indicate that after the inter-RAT cell reselection, the terminal reselects the gNB again. The second RRC connection resume message may further carry information such as the terminal ID.

S608: The gNB sends a second RRC connection resume response message (RRC Connection Suspend) to the terminal, and the terminal receives the second RRC connection resume response message sent by the gNB.

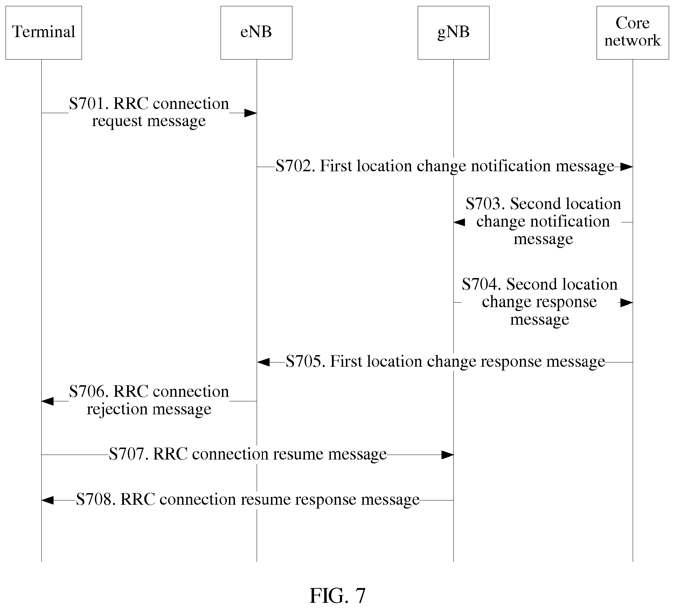

In the signaling transmission process of the inter-RAT cell reselection shown in FIG. 5 and FIG. 6, an X2-like direct interface exists between the eNB and the gNB. If no X2-like direct interface exists between the eNB and the gNB, the eNB and the gNB may exchange signaling by using the core network. Therefore, the signaling transmission process of the inter-RAT cell reselection shown in FIG. 5 may be modified to a signaling transmission process shown in FIG. 7.

S701: Same as S501.

S702: The eNB sends a first terminal location change notification message to the core network, and the core network receives the first location change notification message sent by the eNB.

S703: The core network sends a second terminal location change notification message to the gNB, and the gNB receives the second location change notification message sent by the core network.

Specifically, two optional manners of sending the second terminal location change response message by the core network to the gNB are: After receiving the first location change notification message sent by the eNB, the core network immediately sends the second terminal location change notification message to the gNB. Alternatively, after waiting T3 duration, the core network sends the second terminal location change notification message to the gNB.

S704: Optionally, after receiving the second terminal location change notification message sent by the core network, the gNB disconnects a connection between a gNB side and a core network side, deletes a context of the connection between the gNB side and the core network side, and sends a second location change response message for the second location change notification message to the core network, and the core network receives the second location change response message sent by the gNB.

S705: The core network sends a first location change response message to the eNB, and the eNB receives the first location change response message sent by the core network.

The core network adds information about a timer to the first location change response message, and timeout duration of the timer is T4.

S706: After receiving the first terminal location change response message returned by the core network, the eNB sends an RRC connection rejection message to the terminal.

The RRC connection rejection message carries the information about the timer. The Timeout duration T4 of the timer is used in cooperation with the wait duration T3 for sending the second location change notification message by the core network to the gNB. Optionally, T4 and T3 may be configured to enable a moment at which the gNB receives the second location change notification message sent by the core network to be the same as a timeout moment of the timer that is set by the terminal.

After receiving the RRC connection rejection message, the terminal starts timing of the timer. When the timer reaches the duration T4, the terminal switches the connected mode from the ECO mode into the idle mode.

If the RRC connection rejection message received by the terminal does not carry the information about the timer, the terminal may immediately switch the connected mode from the ECO mode into the idle mode.

Herein, if the timer does not reach the duration T4, the terminal moves from the eNB to the gNB again, so that S707 is performed.

A process of S707 and S708 is similar to a process of S507 and S508, and repetitions are not described herein again.

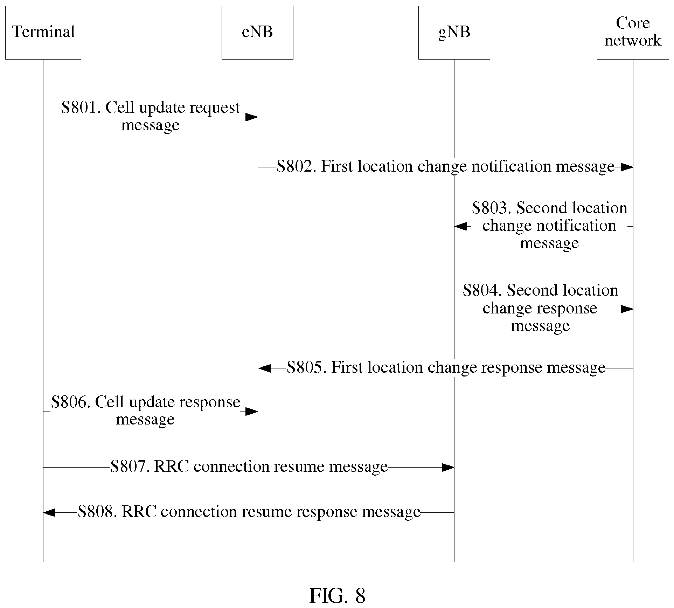

Similarly, if no X2-like direct interface exists between the eNB and the gNB, the signaling transmission process of the inter-RAT cell reselection shown in FIG. 6 may be modified to a signaling transmission process shown in FIG. 8.

In FIG. 8, S801 is the same as S601, a process of S802 to S805 is similar to a process of S702 to S705, S806 is the same as S606, and a process of S807 and S808 is similar to the process of S707 and S708, and repetitions are not described herein again.

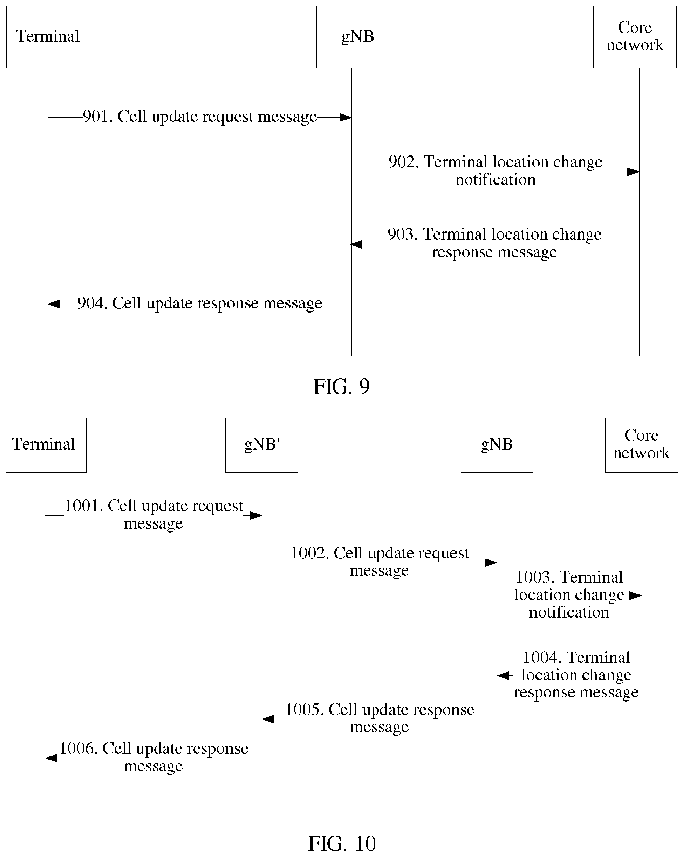

In addition, based on an application scenario the same as that of FIG. 5, a signaling transmission process of another inter-RAT cell reselection according to an embodiment of this application is shown in FIG. 9. Referring to FIG. 9, when the terminal in the ECO mode moves from the gNB to the eNB, a signaling transmission process of a triggered inter-RAT cell reselection is as follows.

S901: The terminal sends a cell update request message to the gNB, and the gNB receives the cell update request message sent by the terminal.

The cell update request message carries a terminal ID and cause indication information. Optionally, the cell update request message may further carry TA indication information, an SNB ID, and a core network ID. The cause indication information herein indicates that the terminal performs an inter-RAT cell reselection process.

S902: The gNB sends a terminal location change notification message (UE Location Change Notify) to the core network, and the core network receives the terminal location change notification message sent by the gNB.

Specifically, two optional manners of sending the terminal location change notification message by the gNB to the core network are: After the gNB receives the cell update request message, the gNB immediately sends the terminal location change notification message to the core network. Alternatively, after waiting T5 duration, the gNB sends the terminal location change notification message to the core network.

S903: The core network sends a location change response message to the gNB, and the gNB receives the location change response message sent by the core network.

S904: The gNB sends a cell update response message to the terminal, and the terminal receives the cell update response message sent by the gNB.

If in S902, the gNB sends the terminal location change notification message to the core network after waiting the T5 duration, the gNB adds information about a timer to the cell update response message sent by the terminal, and timeout duration of the timer is T6. The Timeout duration T6 of the timer is used in cooperation with T5, and the wait duration T5 for sending the terminal location change notification message by the gNB to the core network is enabled to be the same as a timeout moment of the timer that is set by the terminal.

There is a special case of the signaling transmission process shown in FIG. 9. For example, in an application scenario shown in FIG. 4a, an NR gNB' (which is referred to as gNB' for short below) is also a base station in 5G, the NR gNB' and the gNB are in a same RAN-based notification area (RAN-based notification area), and movement of an ECO user in the same RAN-based notification area does not need to be notified to the core network. Therefore, when the terminal reselects the gNB' from the gNB, this process does not need to be notified to the core network, and the gNB maintains a connection between the gNB and a core network side and a context of the terminal. In this case, signaling between the terminal and the gNB needs to be forwarded by the gNB', because the terminal can communicate with only the gNB'. Except this, another signaling processing process is the same as that shown in FIG. 9. Specifically, such a signaling processing procedure is shown in FIG. 10.

S1001: The terminal sends a cell update request message to the gNB', and the gNB' receives the cell update request message sent by the terminal.

S1002: The gNB' sends the cell update request message to the gNB, and the gNB receives the cell update request message sent by the gNB'.

S1003: The gNB sends a terminal location change notification message to the core network, and the core network receives the terminal location change notification message sent by the gNB.

S1004: The core network sends a terminal location change response message to the gNB, and the gNB receives the terminal location change response message sent by the core network.

S1005: Optionally, the gNB sends a cell update response message to the gNB', and the gNB' receives the cell update response message sent by the gNB.

S1006: The gNB' sends the cell update response message to the terminal, and the terminal receives the cell update response message sent by the gNB'.

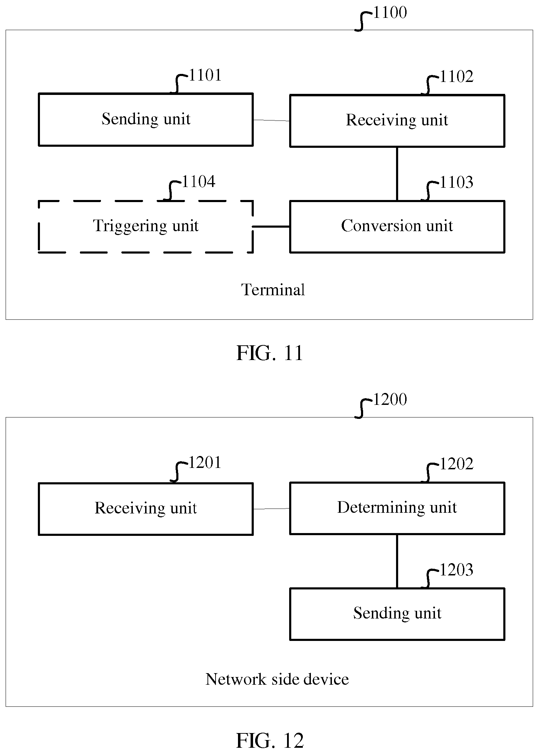

Based on an invention concept the same as that of the method shown in FIG. 2, referring to FIG. 11, an embodiment of this application further provides a terminal 1100, and the terminal 1100 has a function of implementing a behavior of the terminal according to the method shown in FIG. 2. The function may be implemented by using hardware, or may be implemented by hardware executing corresponding software. The hardware or software includes one or more modules corresponding to the foregoing function.

Optionally, the terminal 1100 includes a sending unit 1101, a receiving unit 1102, and a conversion unit 1103.

The sending unit 1101 is configured to send a first request message to a first base station. The first request message carries first cause indication information, and the first cause indication information indicates that the terminal needs to perform a cell reselection process from a second base station to the first base station.

The receiving unit 1102 is configured to: after the sending unit 1101 sends the first request message, receive an acknowledgement returned by the first base station for the first request message.

The conversion unit 1103 is configured to switch a first connected mode into a second connected mode based on the acknowledgement received by the receiving unit 1102. A first RAT system supports the second connected mode. The first base station is located in the first radio access technology RAT system, the second base station is located in a second RAT system, the terminal is in the first connected mode when connecting to the second base station, and the first RAT system does not support the first connected mode. In this way, the inter-RAT cell reselection can be implemented by using a relatively small quantity of signaling, thereby reducing signaling overheads, and avoiding a waste of system resources.

Optionally, the first request message is a Radio Resource Control RRC connection request message, and the acknowledgement is an RRC connection rejection message; or the first request message is a cell update request message, and the acknowledgement is a cell update response message; or the first request message is an RRC connection resume message, and the acknowledgement is an RRC connection resume response message. A larger quantity of possible signaling is provided to carry the cause indication information, thereby expanding diversity of manners in which the inter-RAT cell reselection can be implemented.

Optionally, the acknowledgement includes information about a timer; and the conversion unit 1103 is configured to: start timing of the timer based on the information about the timer; and when the timer times out, release a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

Optionally, the terminal further includes a triggering unit 1104, configured to: before the conversion unit 1103 switches the first connected mode into the second connected mode based on the acknowledgement, trigger the cell reselection process from the first base station to the second base station when the timer does not time out; and the sending unit 1101 is further configured to: when the triggering unit 1104 triggers the cell reselection process from the first base station to the second base station, send a second request message to the second base station. The second request message carries second cause indication information, and the second cause indication information indicates that the terminal reselects, when the timer does not time out, to connect to the second base station. The second cause indication information is carried to indicate, to the second base station, that an objective of this reselection is to reselect, when the timer does not time out, to connect to the second base station, so that the second base station can remain the terminal in the first connected mode instead of switching the first connected mode to another connected mode.

Optionally, the first request message further carries tracking area TA indication information, and the TA indication information is used to indicate whether the first base station needs to trigger a TA update process. In this way, after the terminal reselects the first base station, the tracking area update process may be omitted when the process is not required, thereby reducing a large quantity of signaling overheads on a core network side.

Optionally, the first connected mode is an energy conserved operation ECO mode, and the second connected mode is an idle Idle mode.

Based on an invention concept the same as that of the method shown in FIG. 2, referring to FIG. 12, an embodiment of this application further provides a network side device 1200, and the network side device 1200 has a function of implementing a behavior of the first base station according to the method shown in FIG. 2. The function may be implemented by using hardware, or may be implemented by hardware executing corresponding software. The hardware or software includes one or more modules corresponding to the foregoing function.

Optionally, the network side device 1200 is a first base station. The network side device 1200 includes a receiving unit 1201, a determining unit 1202, and a sending unit 1203.

The receiving unit 1201 is configured to receive a first request message sent by a terminal.

The determining unit 1202 is configured to determine, based on first cause indication information carried in the first request message received by the receiving unit 1201, that the terminal needs to perform a cell reselection process from a second base station to a first base station. The first base station is located in a first radio access technology RAT system, the second base station is located in a second RAT system, the terminal is in a first connected mode when connecting to the second base station, and the first RAT system does not support the first connected mode.

The sending unit 1203 is configured to return an acknowledgement for the first request message to the terminal, to instruct the terminal to switch the first connected mode into a second connected mode. The first RAT system supports the second connected mode.

In this way, the inter-RAT cell reselection can be implemented by using a relatively small quantity of signaling, thereby reducing signaling overheads, and avoiding a waste of system resources.

Optionally, the receiving unit 1201 and the sending unit 1203 are specifically configured to: the receiving unit 1201 receives a Radio Resource Control RRC connection request message sent by the terminal, and the sending unit 1203 returns an RRC connection rejection message to the terminal; or the receiving unit 1201 receives a cell update request message sent by the terminal, and the sending unit 1203 returns a cell update response message to the terminal; or the receiving unit 1201 receives an RRC resume message sent by the terminal, and the sending unit 1203 returns an RRC resume response message to the terminal. In this way, a larger quantity of possible signaling is provided to carry the cause indication information, thereby expanding diversity of manners in which the inter-RAT cell reselection can be implemented.

Optionally, the receiving unit 1201 and the sending unit 1203 are further configured to: after the determining unit 1202 determines that the terminal needs to perform the cell reselection process from the second base station to the first base station, and before the sending unit 1203 returns the acknowledgement for the first request message to the terminal, the sending unit 1203 notifies the second base station of a terminal location change message, and the receiving unit 1201 receives a response message that carries information about a timer and that is sent by the second base station; and the sending unit 1203 is specifically configured to: add the information about the timer to the acknowledgement for the first request message, and return the acknowledgement to the terminal. The information about the timer is used to instruct the terminal to release, when the timer times out, a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

Optionally, if no direct interface exists between the first base station and the second base station, the sending unit 1203 is further configured to notify the second base station of the terminal location change message by using a core network, and the receiving unit 1201 is further configured to receive the response message that carries the information about the timer and that is sent by the second base station by using the core network. Various application scenarios are considered, so that the method in this application is more widely applicable.

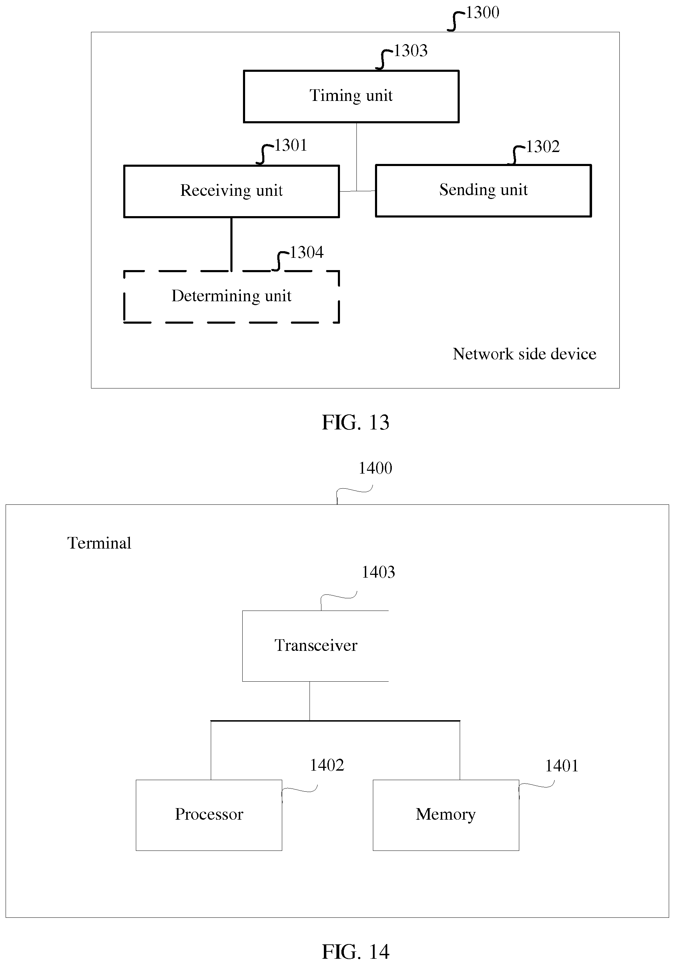

Based on an invention concept the same as that of the method shown in FIG. 2, referring to FIG. 13, an embodiment of this application further provides a network side device 1300. The network side device 1300 is a second base station, a first base station is located in a first radio access technology RAT system, the second base station is located in a second RAT system, a terminal is connected to the second base station, a connected mode of the terminal is a first connected mode, and the first RAT system does not support the first connected mode of the terminal and supports a second connected mode of the terminal. The network side device 1300 includes a receiving unit 1301, a sending unit 1302, a timing unit 1303, and a determining unit 1304.

The receiving unit 1301 is configured to receive a terminal location update indication sent by the first base station. The terminal location update indication is used to indicate that the terminal needs to perform a cell reselection process from the second base station to the first base station.

The sending unit 1302 is configured to: after the receiving unit 1301 receives the terminal location update indication, return a response message for the terminal location update indication to the first base station.

The timing unit 1303 is configured to: after the receiving unit 1301 receives the terminal location update indication, start a first timer.

The sending unit 1302 is further configured to: when the first timer recorded by the timing unit 1303 times out, instruct a core network to release a bearer of the terminal. The response message includes information about a second timer, timeout duration of the second timer is determined by timeout duration of the first timer, and the second timer is configured to: instruct the terminal to release, when the second timer times out, a context of a connection relationship between the terminal and the second base station, and switch the first connected mode into the second connected mode. In this way, a waste of signaling overheads caused by repeated cell reselections because the terminal repeatedly moves between the first base station and the second base station after the terminal triggers the cell reselection from the second base station to the first base station is avoided. The method helps the terminal rapidly establish a connection when reselecting the second base station again within a period, to rapidly restore the first connected mode, thereby reducing the signaling overheads.

Optionally, the receiving unit 1301 is further configured to: when the first timer does not time out, receive a connection request message of the terminal. The network side device further includes a determining unit 1304, configured to: after the receiving unit 1301 receives the connection request message of the terminal, determine, based on cause indication information carried in the connection request message, that the terminal reselects, when the second timer does not time out, to connect to the second base station. The sending unit 1302 is further configured to return a response message for the connection request message to the terminal, to indicate that the terminal is in the first connected mode. The second base station determines, by using the second cause indication information carried in the connection request message sent by the terminal, that an objective of this reselection of the terminal is to reselect, when the second timer does not time out, to connect to the second base station, so that the second base station can remain the terminal in the first connected mode instead of switching the first connected mode to another connected mode.

Optionally, the first connected mode is an energy conserved operation ECO mode, and the second connected mode is an idle Idle mode.

Based on an invention concept the same as that of the method shown in FIG. 2, referring to FIG. 14, an embodiment of this application further provides a terminal 1400, and the terminal 1400 has a function of implementing a behavior of the terminal according to the method shown in FIG. 2. The function may be implemented by using hardware, or may be implemented by hardware executing corresponding software. The hardware or software includes one or more modules corresponding to the foregoing function.

Optionally, a structure of the terminal 1400 includes a memory 1401, a processor 1402, and a transceiver 1403. The memory 1401 is configured to store a group of programs, and the processor 1402 is configured to invoke the programs stored in the memory 1401, to perform the following operations:
sending, by using the transceiver 1403, a first request message to a first base station, where the first request message carries first cause indication information, and the first cause indication information indicates that the terminal needs to perform a cell reselection process from a second base station to the first base station;
after sending the first request message by using the transceiver 1403, receiving, by using the transceiver 1403, an acknowledgement returned by the first base station for the first request message; and
switching a first connected mode into a second connected mode based on the acknowledgement received by using the transceiver 1403, where a first RAT system supports the second connected mode, the first base station is located in the first radio access technology RAT system, the second base station is located in a second RAT system, the terminal is in the first connected mode when connecting to the second base station, and the first RAT system does not support the first connected mode. In this way, the inter-RAT cell reselection can be implemented by using a relatively small quantity of signaling, thereby reducing signaling overheads, and avoiding a waste of system resources.

Optionally, the first request message is a Radio Resource Control RRC connection request message, and the acknowledgement is an RRC connection rejection message; or the first request message is a cell update request message, and the acknowledgement is a cell update response message; or the first request message is an RRC connection resume message, and the acknowledgement is an RRC connection resume response message. A larger quantity of possible signaling is provided to carry the cause indication information, thereby expanding diversity of manners in which the inter-RAT cell reselection can be implemented.

Optionally, the acknowledgement includes information about a timer; and the processor 1402 is further configured to: start timing of the timer based on the information about the timer; and when the timer times out, release a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

Optionally, the processor 1402 is further configured to: before switching the first connected mode into the second connected mode based on the acknowledgement and when the timer does not time out, trigger the cell reselection process from the first base station to the second base station; and when triggering the cell reselection process from the first base station to the second base station, send a second request message to the second base station by using the transceiver 1403. The second request message carries second cause indication information, and the second cause indication information indicates that the terminal reselects, when the timer does not time out, to connect to the second base station. The second cause indication information is carried to indicate, to the second base station, that an objective of this reselection is to reselect, when the timer does not time out, to connect to the second base station, so that the second base station can remain the terminal in the first connected mode instead of switching the first connected mode to another connected mode.

Optionally, the first request message further carries tracking area TA indication information, and the TA indication information is used to indicate whether the first base station needs to trigger a TA update process. In this way, after the terminal reselects the first base station, the tracking area update process may be omitted when the process is not required, thereby reducing a large quantity of signaling overheads on a core network side.

Optionally, the first connected mode is an energy conserved operation ECO mode, and the second connected mode is an idle Idle mode.

In FIG. 14, the processor 1402 may be a central processing unit (English: central processing unit, CPU for short), a network processor (English: network processor, NP for short), or a combination of a CPU and an NP.

The processor 1402 may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof.

The memory 1401 may include a volatile memory (English: volatile memory), such as a random access memory (English: random-access memory, RAM for short). The memory 1401 may alternatively include a non-volatile memory (English: non-volatile memory), such as a flash memory (English: flash memory), a hard disk (English: hard disk drive, HDD for short), or a solid state disk (English: solid-state drive, SSD for short). The memory 1401 may alternatively include a combination of the foregoing types of memories.

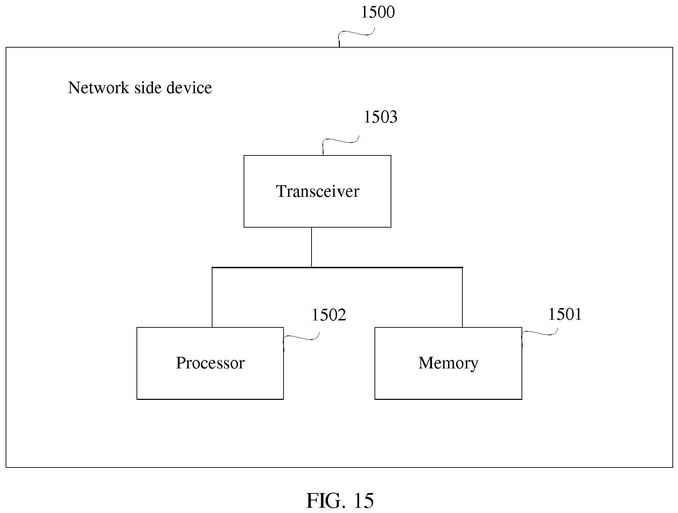

Based on an invention concept the same as that of the method shown in FIG. 2, referring to FIG. 15, an embodiment of this application further provides a network side device 1500, and the network side device 1500 has a function of implementing a behavior of the first base station according to the method shown in FIG. 2. The function may be implemented by using hardware, or may be implemented by hardware executing corresponding software. The hardware or software includes one or more modules corresponding to the foregoing function.

Optionally, the network side device 1500 is a first base station. The network side device 1500 includes a memory 1501, a processor 1502, and a transceiver 1503. The memory 1501 is configured to store a group of programs, and the processor 1502 is configured to invoke the programs stored in the memory 1501, to perform the following operations:
receiving, by using the transceiver 1503, a first request message sent by a terminal;
determining, based on first cause indication information carried in the received first request message, that the terminal needs to perform a cell reselection process from a second base station to a first base station, where the first base station is located in a first radio access technology RAT system, the second base station is located in a second RAT system, the terminal is in a first connected mode when connecting to the second base station, and the first RAT system does not support the first connected mode; and
returning, by using the transceiver 1503, an acknowledgement for the first request message to the terminal, to instruct the terminal to switch the first connected mode into a second connected mode, where the first RAT system supports the second connected mode.

In this way, the inter-RAT cell reselection can be implemented by using a relatively small quantity of signaling, thereby reducing signaling overheads, and avoiding a waste of system resources.

Optionally, the processor 1502 receives, by using the transceiver 1503, an RRC connection request message sent by the terminal, and returns an RRC connection rejection message to the terminal; or the processor 1502 receives, by using the transceiver 1503, a cell update request message sent by the terminal, and returns a cell update response message to the terminal; or the processor 1502 receives, by using the transceiver 1503, an RRC resume message sent by the terminal, and returns an RRC resume response message to the terminal. In this way, a larger quantity of possible signaling is provided to carry the cause indication information, thereby expanding diversity of manners in which the inter-RAT cell reselection can be implemented.

Optionally, after determining that the terminal needs to perform the cell reselection process from the second base station to the first base station and before returning the acknowledgement for the first request message to the terminal by using the transceiver 1503, the processor 1502 notifies, by using the transceiver 1503, the second base station of a terminal location change message, and receives a response message that carries information about a timer and that is sent by the second base station; and the processor 1502 adds, by using the transceiver 1503, the information about the timer to the acknowledgement for the first request message, and returns the acknowledgement to the terminal. The information about the timer is used to instruct the terminal to release, when the timer times out, a context of a connection relationship between the terminal and the second base station, and switch the first connected mode into the second connected mode. This helps the terminal rapidly establish a connection when reselecting the second base station again within a period, to rapidly restore the first connected mode, thereby reducing the signaling overheads.

Optionally, if no direct interface exists between the first base station and the second base station, the processor 1502 notifies, by using the transceiver 1503, the second base station of the terminal location change message by using a core network, and receives the response message that carries the information about the timer and that is sent by the second base station by using the core network. Various application scenarios are considered, so that the method in this application is more widely applicable.

In FIG. 15, the processor 1502 may be a central processing unit (English: central processing unit, CPU for short), a network processor (English: network processor, NP for short), or a combination of a CPU and an NP.

The processor 1502 may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof.

The memory 1501 may include a volatile memory (English: volatile memory), such as a random access memory (English: random-access memory, RAM for short). The memory 1501 may alternatively include a non-volatile memory (English: non-volatile memory), such as a flash memory (English: flash memory), a hard disk (English: hard disk drive, HDD for short), or a solid state disk (English: solid-state drive, SSD for short). The memory 1501 may alternatively include a combination of the foregoing types of memories.

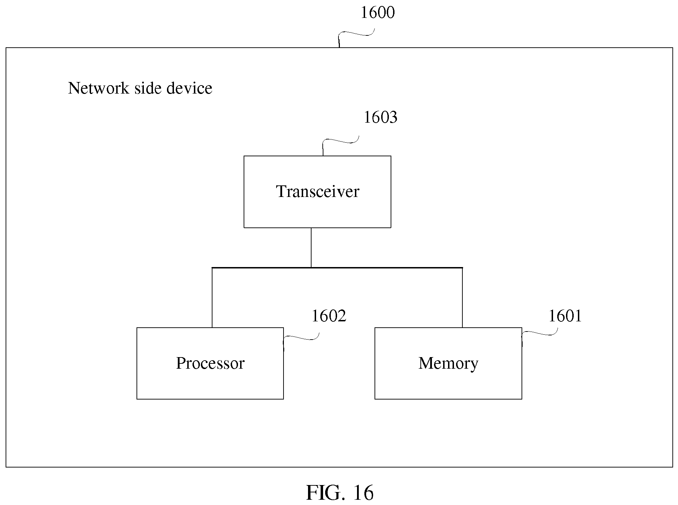

Based on an invention concept the same as that of the method shown in FIG. 2, referring to FIG. 16, an embodiment of this application further provides a network side device 1600. The network side device 1600 is a second base station, a first base station is located in a first radio access technology RAT system, the second base station is located in a second RAT system, a terminal is connected to the second base station, a connected mode of the terminal is a first connected mode, and the first RAT system does not support the first connected mode of the terminal and supports a second connected mode of the terminal. The network side device 1600 includes a memory 1601, a processor 1602, and a transceiver 1603. The memory 1601 is configured to store a group of programs, and the processor 1602 is configured to invoke the programs stored in the memory 1601, to perform the following operations:
receiving, by using the transceiver 1603, a terminal location update indication sent by the first base station, where the terminal location update indication is used to indicate that the terminal needs to perform a cell reselection process from the second base station to the first base station;
after receiving the terminal location update indication, returning, by using the transceiver 1603, a response message for the terminal location update indication to the first base station;
after receiving the terminal location update indication, starting a first timer; and
when the recorded first timer times out, instructing a core network to release a bearer of the terminal, where the response message includes information about a second timer, timeout duration of the second timer is determined by timeout duration of the first timer, and the second timer is configured to instruct the terminal to release, when the second timer times out, a context of a connection relationship between the terminal and the second base station, and switch the first connected mode into the second connected mode. In this way, a waste of signaling overheads caused by repeated cell reselections because the terminal repeatedly moves between the first base station and the second base station after the terminal triggers the cell reselection from the second base station to the first base station is avoided. The method helps the terminal rapidly establish a connection when reselecting the second base station again within a period, to rapidly restore the first connected mode, thereby reducing the signaling overheads.

Optionally, when the first timer does not time out, the processor 1602 receives a connection request message of the terminal by using the transceiver 1603; after receiving the connection request message of the terminal, the processor 1602 determines, based on cause indication information carried in the connection request message, that the terminal reselects, when the second timer does not time out, to connect to the second base station; and the processor 1602 returns a response message for the connection request message to the terminal by using the transceiver 1603, to indicate that the terminal is in the first connected mode. The second base station determines, by using the second cause indication information carried in the connection request message sent by the terminal, that an objective of this reselection of the terminal is to reselect, when the second timer does not time out, to connect to the second base station, so that the second base station can remain the terminal in the first connected mode instead of switching the first connected mode to another connected mode.

Optionally, the first connected mode is an energy conserved operation ECO mode, and the second connected mode is an idle Idle mode.

In FIG. 16, the processor 1602 may be a central processing unit (English: central processing unit, CPU for short), a network processor (English: network processor, NP for short), or a combination of a CPU and an NP.

The processor 1602 may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGAfor short), a generic array logic (English: generic array logic, GAL for short), or any combination thereof.

The memory 1601 may include a volatile memory (English: volatile memory), such as a random access memory (English: random-access memory, RAM for short). The memory 1601 may alternatively include a non-volatile memory (English: non-volatile memory), such as a flash memory (English: flash memory), a hard disk (English: hard disk drive, HDD for short), or a solid state disk (English: solid-state drive, SSD for short). The memory 1601 may alternatively include a combination of the foregoing types of memories.

Person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of appended claims.

## Claims

1. An inter-RAT cell reselection method, comprising:
sending (201), by a terminal, a first request message to a first base station, wherein the first request message carries first cause indication information, the first cause indication information indicates that the terminal needs to perform a cell reselection process from a second base station to the first base station, the first base station is located in a first radio access technology, RAT, system, the second base station is located in a second RAT system, the terminal is in a first connected mode when connecting to the second base station, and the first RAT system does not support the first connected mode; wherein the first RAT system is the 4.5G/4G system, the second RAT system is the 5G system; wherein the first connected mode is an energy conserved operation, ECO, mode, and in the ECO mode, a data plane connection and a control plane connection between a radio access network, RAN, side and a core network, CN, side are kept; and
receiving (205), by the terminal, an acknowledgement returned by the first base station for the first request message, and switching (206) the first connected mode into a second connected mode based on the acknowledgement, wherein the first RAT system supports the second connected mode, wherein the second connected mode is an idle mode.

2. The method according to claim 1, wherein the acknowledgement comprises information about a timer; and
the switching, by the terminal, the first connected mode into a second connected mode based on the acknowledgement comprises:
starting, by the terminal, timing of the timer based on the information about the timer; and when the timer times out, releasing a context of a connection relationship between the terminal and the second base station, and switching the first connected mode into the second connected mode.

3. The method according to claim 2, wherein before the switching, by the terminal, the first connected mode into a second connected mode based on the acknowledgement, the method further comprises:
if the terminal triggers the cell reselection process from the first base station to the second base station when the timer does not time out, sending, by the terminal, a second request message to the second base station, wherein the second request message carries second cause indication information, and the second cause indication information indicates that the terminal reselects, when the timer does not time out, to connect to the second base station.

4. An inter-RAT cell reselection method, comprising:
receiving (201), by a first base station, a first request message sent by a terminal, wherein the first request message carries first cause indication information; and determining (202) that the terminal needs to perform a cell reselection process from a second base station to the first base station, wherein the first base station is located in a first radio access technology RAT system, the second base station is located in a second RAT system, the terminal is in a first connected mode when connecting to the second base station, and the first RAT system does not support the first connected mode; wherein the first RAT system is the 4.5G/4G system, the second RAT system is the 5G system; wherein the first connected mode is an energy conserved operation, ECO, mode, and in the ECO mode, a data plane connection and a control plane connection between a radio access network, RAN, side and a core network, CN, side are kept; and
returning (205), by the first base station, an acknowledgement for the first request message to the terminal, to instruct the terminal to switch the first connected mode into a second connected mode, wherein the first RAT system supports the second connected mode, wherein the second connected mode is an idle mode.

5. The method according to claim 4, wherein the receiving, by a first base station, a first request message sent by a terminal and the returning an acknowledgement for the first request message to the terminal comprises:
receiving, by the first base station, a Radio Resource Control RRC connection request message sent by the terminal, and returning an RRC connection rejection message to the terminal; or
receiving, by the first base station, a cell update request message sent by the terminal, and returning a cell update response message to the terminal; or
receiving, by the first base station, an RRC resume message sent by the terminal, and returning an RRC resume response message to the terminal.

6. The method according to claim 4 or 5, wherein after the determining, by the first base station, that the terminal needs to perform a cell reselection process from a second base station to the first base station and before the returning an acknowledgement for the first request message to the terminal, the method further comprises:
notifying, by the first base station, the second base station of a terminal location change message, and receiving a response message that carries information about a timer and that is sent by the second base station; and
the returning, by the first base station, an acknowledgement for the first request message to the terminal comprises:
adding, by the first base station, the information about the timer to the acknowledgement for the first request message, and returning the acknowledgement to the terminal, wherein the information about the timer is used to instruct the terminal to release, when the timer times out, a context of a connection relationship between the terminal and the second base station, and switches the first connected mode into the second connected mode.

7. The method according to claim 6, wherein the notifying, by the first base station, the second base station of a terminal location change message, and receiving a response message that carries information about a timer and that is sent by the second base station comprises:
if no direct interface exists between the first base station and the second base station, notifying, by the first base station, the second base station of the terminal location change message by using a core network, and receiving the response message that carries the information about the timer and that is sent by the second base station by using the core network.

8. An inter-RAT cell reselection method, wherein a first base station is located in a first radio access technology RAT system, a second base station is located in a second RAT system, a terminal is connected to the second base station, a connected mode of the terminal is a first connected mode, the first RAT system does not support the first connected mode of the terminal and supports a second connected mode of the terminal; wherein the first RAT system is the 4.5G/4G system, the second RAT system is the 5G system; wherein the first connected mode is an energy conserved operation, ECO, mode, and in the ECO mode, a data plane connection and a control plane connection between a radio access network, RAN, side and a core network, CN, side are kept; wherein the second connected mode is an idle mode; and the method comprises:
receiving (203), by the second base station, a terminal location update indication sent by the first base station, wherein the terminal location update indication is used to indicate that the terminal needs to perform a cell reselection process from the second base station to the first base station;
returning (204), by the second base station, a response message for the terminal location update indication to the first base station, and starting a first timer; and
instructing (204a), by the second base station when the first timer times out, a core network to release a bearer of the terminal, wherein
the response message comprises information about a second timer, timeout duration of the second timer is determined by timeout duration of the first timer, and the second timer is configured to instruct the terminal to release, when the second timer times out, a context of a connection relationship between the terminal and the second base station, and switch the first connected mode into the second connected mode.

9. The method according to claim 8, wherein the method further comprises:
if the second base station receives a connection request message of the terminal when the first timer does not time out, determining, based on cause indication information carried in the connection request message, that the terminal reselects, when the second timer does not time out, to connect to the second base station, so that
the second base station returns a response message for the connection request message to the terminal, to indicate that the terminal is in the first connected mode.

10. A terminal, wherein a first base station is located in a first radio access technology RAT system, the second base station is located in a second RAT system, the terminal is in a first connected mode when connecting to the second base station, the first RAT system does not support the first connected mode; wherein the first RAT system is the 4.5G/4G system, the second RAT system is the 5G system; wherein the first connected mode is an energy conserved operation, ECO, mode, and in the ECO mode, a data plane connection and a control plane connection between a radio access network, RAN, side and a core network, CN, side are kept; wherein the second connected mode is an idle mode; and the terminal comprises: a transceiver, a processor, and a memory, wherein the memory is configured to store a group of instructions, and the processor is configured to invoke the instructions stored in the memory, to perform the following operations:
sending, by using the transceiver, a first request message to the first base station, wherein the first request message carries first cause indication information, and the first cause indication information indicates that the terminal needs to perform a cell reselection process from the second base station to the first base station;
after sending the first request message by using the sending unit, receiving, by using the transceiver, an acknowledgement returned by the first base station for the first request message; and
switching the first connected mode into a second connected mode based on the received acknowledgement, wherein the first RAT system supports the second connected mode.

11. The method or terminal according to any of claims 1, 2 and 10, wherein the first request message is a Radio Resource Control RRC connection request message, and the acknowledgement is an RRC connection rejection message; or
the first request message is a cell update request message, and the acknowledgement is a cell update response message; or
the first request message is an RRC connection resume message, and the acknowledgement is an RRC connection resume response message.

12. The method or terminal according to any one of claims 1 to 3 and 10 to 11, wherein the first request message further carries tracking area TA indication information, and the TA indication information is used to indicate whether the first base station needs to trigger a TA update process.

13. A network side device, wherein the network side device is a first base station, the first base station is located in a first radio access technology RAT system, the second base station is located in a second RAT system, the terminal is in a first connected mode when connecting to the second base station, and the first RAT system does not support the first connected mode; wherein the first RAT system is the 4.5G/4G system, the second RAT system is the 5G system; wherein the first connected mode is an energy conserved operation, ECO, mode, and in the ECO mode, a data plane connection and a control plane connection between a radio access network, RAN, side and a core network, CN, side are kept; wherein the second connected mode is an idle mode; and the network side device comprises: a transceiver, a processor, and a memory, wherein the memory is configured to store a group of instructions, and the processor is configured to invoke the instructions stored in the memory, to perform the following operations:
receiving, by using the transceiver, a first request message sent by the terminal;
determining, based on first cause indication information carried in the received first request message, that the terminal needs to perform a cell reselection process from the second base station to the first base station; and
returning an acknowledgement for the first request message to the terminal by using the transceiver, to instruct the terminal to switch the first connected mode into a second connected mode, wherein the first RAT system supports the second connected mode.

14. A network side device, wherein the network side device is a second base station, a first base station is located in a first radio access technology RAT system, the second base station is located in a second RAT system, a terminal is connected to the second base station, a connected mode of the terminal is a first connected mode, and the first RAT system does not support the first connected mode of the terminal and supports a second connected mode of the terminal; wherein the first RAT system is the 4.5G/4G system, the second RAT system is the 5G system; wherein the first connected mode is an energy conserved operation, ECO, mode, and in the ECO mode, a data plane connection and a control plane connection between a radio access network, RAN, side and a core network, CN, side are kept; wherein the second connected mode is an idle mode; and the network side device comprises: a transceiver, a processor, and a memory, wherein the memory is configured to store a group of instructions, and the processor is configured to invoke the instructions stored in the memory, to perform the following operations:
receiving, by using the transceiver, a terminal location update indication sent by the first base station, wherein the terminal location update indication is used to indicate that the terminal needs to perform a cell reselection process from the second base station to the first base station;
after receiving the terminal location update indication, returning a response message for the terminal location update indication to the first base station by using the transceiver;
after receiving the terminal location update indication, starting a first timer; and
when the recorded first timer times out, instructing a core network to release a bearer of the terminal, wherein
the response message comprises information about a second timer, timeout duration of the second timer is determined by timeout duration of the first timer, and the second timer is configured to instruct the terminal to release, when the second timer times out, a context of a connection relationship between the terminal and the second base station, and switch the first connected mode into the second connected mode.

## Patentansprüche

1. Verfahren zur Inter-RAT-Zellenneuauswahl, umfassend:
Senden (201), durch ein Endgerät, einer ersten Anforderungsnachricht an eine erste Basisstation, wobei die erste Anforderungsnachricht erste Ursachenanzeigeinformationen trägt, wobei die ersten Ursachenanzeigeinformationen anzeigen, dass das Endgerät einen Prozess der Zellenneuwahl von einer zweiten Basisstation zur ersten Basisstation durchführen muss, wobei sich die erste Basisstation in einem ersten "Radio Access Technology"-, RAT-, System befindet, die zweite Basisstation sich in einem zweiten RAT-System befindet, das Endgerät sich beim Verbinden mit der zweiten Basisstation in einem ersten Verbindungsmodus befindet, und das erste RAT-System den ersten Verbindungsmodus nicht unterstützt;
wobei das erste RAT-System das 4.5G/4G-System ist, wobei das zweite RAT-System das 5G-System ist; wobei der erste Verbindungsmodus ein "Energy Conserved Operation"-, ECO-, Modus ist, und wobei im ECO-Modus eine Datenebenenverbindung und eine Steuerebenenverbindung zwischen einer "Radio Access Network"-, RAN-, Seite und einer "Core Network"-, CN-, Seite aufrechterhalten werden; und
Empfangen (205), durch das Endgerät, einer Bestätigung, die von der ersten Basisstation für die erste Anforderungsnachricht zurückgegeben wird, und Umschalten (206) des ersten Verbindungsmodus in einen zweiten Verbindungsmodus auf der Grundlage der Bestätigung, wobei das erste RAT-System den zweiten Verbindungsmodus unterstützt, wobei der zweite Verbindungsmodus ein Leerlaufmodus ist.

2. Verfahren nach Anspruch 1, wobei die Bestätigung Informationen über einen Zeitgeber umfasst; und
das Umschalten, durch das Endgerät, des ersten Verbindungsmodus in einen zweiten Verbindungsmodus auf der Grundlage der Bestätigung umfasst:
Starten, durch das Endgerät, von Zeitmessung des Zeitgebers auf der Grundlage der Informationen über den Zeitgeber; und wenn der Zeitgeber abläuft, Freigeben eines Kontextes einer Verbindungsbeziehung zwischen dem Endgerät und der zweiten Basisstation und Umschalten des ersten Verbindungsmodus in den zweiten Verbindungsmodus.

3. Verfahren nach Anspruch 2, wobei das Verfahren vor dem Umschalten, durch das Endgerät, des ersten Verbindungsmodus in einen zweiten Verbindungsmodus auf der Grundlage der Bestätigung ferner umfasst:
wenn das Endgerät den Prozess der Zellenneuwahl von der ersten Basisstation zur zweiten Basisstation auslöst, wenn der Zeitgeber nicht abläuft, Senden, durch das Endgerät, einer zweiten Anforderungsnachricht an die zweite Basisstation, wobei die zweite Anforderungsnachricht zweite Ursachenanzeigeinformationen trägt und die zweiten Ursachenanzeigeinformationen anzeigen, dass das Endgerät, wenn der Zeitgeber nicht abläuft, eine Neuauswahl zum Verbinden mit der zweiten Basisstation durchführt.

4. Verfahren zur Inter-RAT-Zellenneuauswahl, umfassend:
Empfangen (201), durch eine erste Basisstation, einer ersten Anforderungsnachricht, die von einem Endgerät gesendet wird, wobei die erste Anforderungsnachricht erste Ursachenanzeigeinformationen trägt; und Bestimmen (202), dass das Endgerät einen Prozess der Zellenneuwahl von einer zweiten Basisstation zur ersten Basisstation durchführen muss, wobei sich die erste Basisstation in einem ersten "Radio Access Technology"-, RAT-, System befindet, die zweite Basisstation sich in einem zweiten RAT-System befindet, das Endgerät sich beim Verbinden mit der zweiten Basisstation in einem ersten Verbindungsmodus befindet, und das erste RAT-System den ersten Verbindungsmodus nicht unterstützt; wobei das erste RAT-System das 4.5G/4G-System ist, das zweite RAT-System das 5G-System ist; wobei der erste Verbindungsmodus ein "Energy Conserved Operation"-, ECO-, Modus ist und im ECO-Modus eine Datenebenenverbindung und eine Steuerebenenverbindung zwischen einer "Radio Access Network"-, RAN-, Seite, und einer "Core Network"-, CN-, Seite, aufrechterhalten wird; und
Zurückgeben (205), durch die erste Basisstation, einer Bestätigung für die erste Anforderungsnachricht an das Endgerät, zum Anweisen des Endgeräts, den ersten Verbindungsmodus in einen zweiten Verbindungsmodus umzuschalten, wobei das erste RAT-System den zweiten Verbindungsmodus unterstützt, wobei der zweite Verbindungsmodus ein Leerlaufmodus ist.

5. Verfahren nach Anspruch 4, wobei das Empfangen, durch eine erste Basisstation, einer ersten Anforderungsnachricht, die von einem Endgerät gesendet wurde, und das Zurückgeben einer Bestätigung für die erste Anforderungsnachricht an das Endgerät umfasst:
Empfangen, durch die erste Basisstation, einer vom Endgerät gesendeten "Radio Resource Control"-, RRC-, Verbindungsanforderungsnachricht und Zurückgeben einer RRC-Verbindungsablehnungsnachricht an das Endgerät; oder
Empfangen, durch die erste Basisstation, einer vom Endgerät gesendeten Zellenaktualisierungsanforderungsnachricht und Zurückgeben einer Zellenaktualisierungsantwortnachricht an das Endgerät; oder
Empfangen, durch die erste Basisstation, einer vom Endgerät gesendeten RRC-Fortsetzungsnachricht und Zurückgeben einer RRC-Fortsetzungsantwortnachricht an das Endgerät.

6. Verfahren nach Anspruch 4 oder 5, wobei das Verfahren nach dem Bestimmen, durch die erste Basisstation, dass das Endgerät einen Prozess der Zellenneuwahl von einer zweiten Basisstation zur ersten Basisstation durchführen muss, und vor dem Zurückgeben einer Bestätigung für die erste Anforderungsnachricht an das Endgerät ferner umfasst:
Benachrichtigen, durch die erste Basisstation, der zweiten Basisstation über eine Endgerätestandortänderungsnachricht und Empfangen einer Antwortnachricht, die Informationen über einen Zeitgeber trägt und die von der zweiten Basisstation gesendet wird; und
das Zurückgeben, durch die erste Basisstation, einer Bestätigung für die erste Anforderungsnachricht an das Endgerät umfasst:
Hinzufügen, durch die erste Basisstation, der Informationen über den Zeitgeber zur Bestätigung für die erste Anforderungsnachricht, und Zurückgeben der Bestätigung an das Endgerät, wobei die Informationen über den Zeitgeber dazu verwendet werden, das Endgerät anzuweisen, bei Ablauf des Zeitgebers einen Kontext einer Verbindungsbeziehung zwischen dem Endgerät und der zweiten Basisstation freizugeben und den ersten Verbindungsmodus in den zweiten Verbindungsmodus umzuschalten.

7. Verfahren nach Anspruch 6, wobei das Benachrichtigen, durch die erste Basisstation, der zweiten Basisstation über eine Endgerätestandortänderungsnachricht und das Empfangen einer Antwortnachricht, die Informationen über einen Zeitgeber trägt und die von der zweiten Basisstation gesendet wird, umfasst:
wenn keine direkte Schnittstelle zwischen der ersten Basisstation und der zweiten Basisstation vorhanden ist, Benachrichtigen, durch die erste Basisstation, der zweiten Basisstation über die Endgerätestandortänderungsnachricht unter Verwendung eines Kernnetzwerks und Empfangen der Antwortnachricht, die die Informationen über den Zeitgeber trägt und die von der zweiten Basisstation unter Verwendung des Kernnetzwerks gesendet wird.

8. Verfahren zur Inter-RAT-Zellenneuauswahl, wobei sich eine erste Basisstation in einem ersten "Radio Access Technology"-, RAT-, System befindet, eine zweite Basisstation sich in einem zweiten RAT-System befindet, ein Endgerät mit der zweiten Basisstation verbunden ist, ein Verbindungsmodus des Endgeräts ein erster Verbindungsmodus ist, das erste RAT-System den ersten Verbindungsmodus des Endgeräts nicht unterstützt und einen zweiten Verbindungsmodus des Endgeräts unterstützt; wobei das erste RAT-System das 4.5G/4G-System ist, das zweite RAT-System das 5G-System ist; wobei der erste Verbindungsmodus ein "Energy Conserved Operation"-, ECO-, Modus ist und im ECO-Modus eine Datenebenenverbindung und eine Steuerebenenverbindung zwischen einer "Radio Access Network"-, RAN-, Seite und einer "Core Network"-, CN-, Seite aufrechterhalten werden; wobei der zweite Verbindungsmodus ein Leerlaufmodus ist; und das Verfahren umfasst:
Empfangen (203), durch die zweite Basisstation, einer Endgerätestandortaktualisierungsanzeige, die von der ersten Basisstation gesendet wird, wobei die Endgerätestandortaktualisierungsanzeige verwendet wird, um anzuzeigen, dass das Endgerät einen Prozess der Zellenneuwahl von der zweiten Basisstation zur ersten Basisstation durchführen muss;
Zurückgeben (204), durch die zweite Basisstation, einer Antwortnachricht für die Endgerätestandortaktualisierungsanzeige an die erste Basisstation, und Starten eines ersten Zeitgebers; und
Anweisen (204a), durch die zweite Basisstation bei Ablauf des ersten Zeitgebers, eines Kernnetzwerks zum Freigeben eines Trägers des Endgeräts, wobei
die Antwortnachricht Informationen über einen zweiten Zeitgeber umfasst, die Zeitablaufdauer des zweiten Zeitgebers durch die Zeitablaufdauer des ersten Zeitgebers bestimmt wird und der zweite Zeitgeber dafür ausgelegt ist, das Endgerät anzuweisen, bei Ablauf des zweiten Zeitgebers einen Kontext einer Verbindungsbeziehung zwischen dem Endgerät und der zweiten Basisstation freizugeben und den ersten Verbindungsmodus in den zweiten Verbindungsmodus zu schalten.

9. Verfahren nach Anspruch 8, wobei das Verfahren ferner umfasst:
wenn die zweite Basisstation eine Verbindungsanforderungsnachricht des Endgeräts empfängt, wenn der erste Zeitgeber nicht abläuft, Bestimmen, auf der Grundlage der in der Verbindungsanforderungsnachricht übertragenen Ursachenanzeigeinformationen, dass das Endgerät, wenn der zweite Zeitgeber nicht abläuft, eine Neuauswahl zum Verbinden mit der zweiten Basisstation durchführt, so dass
die zweite Basisstation eine Antwortnachricht für die Verbindungsanforderungsnachricht an das Endgerät zurückgibt, um anzuzeigen, dass sich das Endgerät im ersten Verbindungsmodus befindet.

10. Endgerät, wobei sich eine erste Basisstation in einem ersten "Radio Access Technology"-, RAT-, System befindet, die zweite Basisstation sich in einem zweiten RAT-System befindet, das Endgerät sich in einem ersten Verbindungsmodus befindet, wenn es sich mit der zweiten Basisstation verbindet, das erste RAT-System den ersten Verbindungsmodus nicht unterstützt; wobei das erste RAT-System das 4.5G/4G-System ist, das zweite RAT-System das 5G-System ist; wobei der erste Verbindungsmodus ein "Energy Conserved Operation"-, ECO-, Modus ist und im ECO-Modus eine Datenebenenverbindung und eine Steuerebenenverbindung zwischen einer "Radio Access Network"-, RAN-, Seite, und einer "Core Network"-, CN-, Seite, aufrechterhalten werden; wobei der zweite Verbindungsmodus ein Leerlaufmodus ist; und das Endgerät umfasst: einen Sender-Empfänger, einen Prozessor und einen Speicher, wobei der Speicher dafür ausgelegt ist, eine Gruppe von Anweisungen zu speichern, und der Prozessor dafür ausgelegt ist, die im Speicher gespeicherten Anweisungen zum Durchführen der folgenden Operationen aufzurufen:
Senden, unter Verwendung des Sender-Empfängers, einer ersten Anforderungsnachricht an die erste Basisstation, wobei die erste Anforderungsnachricht erste Ursachenanzeigeinformationen trägt und die ersten Ursachenanzeigeinformationen anzeigen, dass das Endgerät einen Prozess der Zellenneuwahl von der zweiten Basisstation zur ersten Basisstation durchführen muss;
nach dem Senden der ersten Anforderungsnachricht unter Verwendung der Sendeeinheit, Empfangen, unter Verwendung des Sender-Empfängers, einer von der ersten Basisstation zurückgegebenen Bestätigung für die erste Anforderungsnachricht; und
Umschalten des ersten Verbindungsmodus in einen zweiten Verbindungsmodus auf der Grundlage der empfangenen Bestätigung, wobei das erste RAT-System den zweiten Verbindungsmodus unterstützt.

11. Verfahren oder Endgerät nach einem der Ansprüche 1, 2 und 10, wobei die erste Anforderungsnachricht eine "Radio Resource Control"-, RRC-, Verbindungsanforderungsnachricht ist und die Bestätigung eine RRC-Verbindungsablehnungsnachricht ist; oder
die erste Anforderungsnachricht eine Zellenaktualisierungsanforderungsnachricht ist und die Bestätigung eine Zellenaktualisierungsantwortnachricht ist; oder
die erste Anforderungsnachricht eine RRC-Verbindungsfortsetzungsnachricht ist, und die Bestätigung eine RRC-Verbindungsfortsetzungsantwortnachricht ist.

12. Verfahren oder Endgerät nach einem der Ansprüche 1 bis 3 und 10 bis 11, wobei die erste Anforderungsnachricht ferner "Tracking Area"-, TA-, Anzeigeinformationen trägt und die TA-Anzeigeinformationen verwendet werden, um anzuzeigen, ob die erste Basisstation einen TA-Aktualisierungsprozess auslösen muss.

13. Netzwerkseitige Vorrichtung, wobei die netzwerkseitige Vorrichtung eine erste Basisstation ist, die erste Basisstation sich in einem ersten "Radio Access Technology"-, RAT-, System befindet, die zweite Basisstation sich in einem zweiten RAT-System befindet, das Endgerät sich in einem ersten Verbindungsmodus befindet, wenn es sich mit der zweiten Basisstation verbindet, und das erste RAT-System den ersten Verbindungsmodus nicht unterstützt; wobei das erste RAT-System das 4.5G/4G-System ist, das zweite RAT-System das 5G-System ist; wobei der erste Verbindungsmodus ein "Energy Conserved Operation"-, ECO-, Modus ist und im ECO-Modus eine Datenebenenverbindung und eine Steuerebenenverbindung zwischen einer "Radio Access Network"-, RAN-, Seite, und einer "Core Network"-, CN-, Seite, aufrechterhalten werden; wobei der zweite Verbindungsmodus ein Leerlaufmodus ist; und die netzwerkseitige Vorrichtung umfasst: einen Sender-Empfänger, einen Prozessor und einen Speicher, wobei der Speicher dafür ausgelegt ist, eine Gruppe von Anweisungen zu speichern, und der Prozessor dafür ausgelegt ist, die im Speicher gespeicherten Anweisungen zum Durchführen der folgenden Operationen aufzurufen:
Empfangen, unter Verwendung des Sender-Empfängers, einer ersten Anforderungsnachricht, die vom Endgerät gesendet wird;
Bestimmen, auf der Grundlage erster Ursachenanzeigeinformationen, die in der empfangenen ersten Anforderungsnachricht getragen werden, dass das Endgerät einen Prozess der Zellenneuwahl von der zweiten Basisstation zur ersten Basisstation durchführen muss; und
Zurückgeben einer Bestätigung für die erste Anforderungsnachricht an das Endgerät unter Verwendung des Sender-Empfängers zum Anweisen des Endgeräts, den ersten Verbindungsmodus in einen zweiten Verbindungsmodus umzuschalten, wobei das erste RAT-System den zweiten Verbindungsmodus unterstützt.

14. Netzwerkseitige Vorrichtung, wobei die netzwerkseitige Vorrichtung eine zweite Basisstation ist, eine erste Basisstation sich in einem ersten "Radio Access Technology"-, RAT-, System befindet, die zweite Basisstation sich in einem zweiten RAT-System befindet, ein Endgerät mit der zweiten Basisstation verbunden ist, ein Verbindungsmodus des Endgeräts ein erster Verbindungsmodus ist, und das erste RAT-System den ersten Verbindungsmodus des Endgeräts nicht unterstützt und einen zweiten Verbindungsmodus des Endgeräts unterstützt; wobei das erste RAT-System das 4.5G/4G-System ist, das zweite RAT-System das 5G-System ist; wobei der erste Verbindungsmodus ein "Energy Conserved Operation"-, ECO-, Modus ist und im ECO-Modus eine Datenebenenverbindung und eine Steuerebenenverbindung zwischen einer "Radio Access Network"-, RAN-, Seite, und einer "Core Network"-, CN-, Seite, aufrechterhalten werden; wobei der zweite Verbindungsmodus ein Leerlaufmodus ist; und die netzwerkseitige Vorrichtung umfasst: einen Sender-Empfänger, einen Prozessor und einen Speicher, wobei der Speicher dafür ausgelegt ist, eine Gruppe von Anweisungen zu speichern, und der Prozessor dafür ausgelegt ist, die im Speicher gespeicherten Anweisungen zum Durchführen der folgenden Operationen aufzurufen:
Empfangen, unter Verwendung des Sender-Empfängers, einer Endgerätestandortaktualisierungsanzeige, die von der ersten Basisstation gesendet wird, wobei die Endgerätestandortaktualisierungsanzeige verwendet wird, um anzuzeigen, dass das Endgerät einen Prozess der Zellenneuwahl von der zweiten Basisstation zur ersten Basisstation durchführen muss;
nach dem Empfangen der Endgerätestandortaktualisierungsanzeige, Zurückgeben einer Antwortnachricht für die Endgerätestandortaktualisierungsanzeige an die erste Basisstation unter Verwendung des Sender-Empfängers;
nach dem Empfangen der Endgerätestandortaktualisierungsanzeige, Starten eines ersten Zeitgebers; und
wenn der aufgezeichnete erste Zeitgeber abläuft, Anweisen eines Kernnetzwerks, einen Träger des Endgeräts freizugeben, wobei
die Antwortnachricht Informationen über einen zweiten Zeitgeber umfasst, die Zeitablaufdauer des zweiten Zeitgebers durch die Zeitablaufdauer des ersten Zeitgebers bestimmt wird und der zweite Zeitgeber dafür ausgelegt ist, das Endgerät anzuweisen, bei Ablauf des zweiten Zeitgebers einen Kontext einer Verbindungsbeziehung zwischen dem Endgerät und der zweiten Basisstation freizugeben und den ersten Verbindungsmodus in den zweiten Verbindungsmodus zu schalten.

## Revendications

1. Procédé de resélection de cellule inter-RAT, comprenant les étapes consistant à :
envoyer (201), par un terminal, un premier message de demande à une première station de base, le premier message de demande transportant une première information d'indication de cause, la première information d'indication de cause indiquant que le terminal doit réaliser un processus de resélection de cellule d'une seconde station de base à la première station de base, la première station de base étant localisée dans un premier système à technologie d'accès radio (RAT), la seconde station de base étant localisée dans un second système RAT, le terminal étant dans un premier mode connecté quand il se connecte à la seconde station de base, et le premier système RAT ne prenant pas en charge le premier mode connecté ; le premier système RAT étant le système 4,5G/4G, le second système RAT étant le système 5G ; le premier mode connecté étant un mode à conservation d'énergie (ECO) et, dans le mode ECO, une connexion de plan de données et une connexion de plan de contrôle entre un côté réseau d'accès radio (RAN) et un côté réseau central (CN) étant conservées ; et
recevoir (205), par le terminal, un acquittement renvoyé par la première station de base pour le premier message de demande et commuter (206) le premier mode connecté en un second mode connecté sur la base de l'acquittement, le premier système RAT prenant en charge le second mode connecté, le second mode connecté étant un mode d'inactivité.

2. Procédé selon la revendication 1, dans lequel l'acquittement comprend une information concernant un temporisateur ; et
la commutation, par le terminal, du premier mode connecté en un second mode connecté sur la base de l'acquittement comprend les étapes consistant à :
démarrer, par le terminal, une temporisation du temporisateur sur la base de l'information concernant le temporisateur ; et quand le temporisateur expire, libérer un contexte d'une relation de connexion entre le terminal et la seconde station de base et commuter le premier mode connecté en le second mode connecté.

3. Procédé selon la revendication 2, le procédé comprenant en outre, avant la commutation, par le terminal, du premier mode connecté en un second mode connecté sur la base de l'acquittement, l'étape consistant à :
si le terminal déclenche le processus de resélection de cellule de la première station de base à la seconde station de base quand le temporisateur n'expire pas, envoyer, par le terminal, un second message de demande à la seconde station de base, le second message de demande transportant une seconde information d'indication de cause, et la seconde information d'indication de cause indiquant que le terminal resélectionne, quand le temporisateur n'expire pas, la seconde station de base pour s'y connecter.

4. Procédé de resélection de cellule inter-RAT, comprenant les étapes consistant à :
recevoir (201), par une première station de base, un premier message de demande envoyé par un terminal, le premier message de demande transportant une première information d'indication de cause ; et déterminer (202) que le terminal doit réaliser un processus de resélection de cellule d'une seconde station de base à la première station de base, la première station de base étant localisée dans un premier système à technologie d'accès radio (RAT), la seconde station de base étant localisée dans un second système RAT, le terminal étant dans un premier mode connecté quand il se connecte à la seconde station de base, et le premier système RAT ne prenant pas en charge le premier mode connecté ; le premier système RAT étant le système 4,5G/4G, le second système RAT étant le système 5G ; le premier mode connecté étant un mode à conservation d'énergie (ECO) et, dans le mode ECO, une connexion de plan de données et une connexion de plan de contrôle entre un côté réseau d'accès radio (RAN) et un côté réseau central (CN) étant conservées ; et
renvoyer (205), par la première station de base au terminal, un acquittement pour le premier message de demande pour donner l'instruction au terminal de commuter le premier mode connecté en un second mode connecté, le premier système RAT prenant en charge le second mode connecté, le second mode connecté étant un mode d'inactivité.

5. Procédé selon la revendication 4, dans lequel, la réception, par une première station de base, d'un premier message de demande envoyé par un terminal et le renvoi au terminal d'un acquittement pour le premier message de demande comprennent l'étape consistant à :
recevoir, par la première station de base, un message de demande de connexion de contrôle des ressources radio (RRC) envoyé par le terminal et renvoyer un message de rejet de connexion RRC au terminal ; ou
recevoir, par la première station de base, un message de demande de mise à jour de cellule envoyé par le terminal et renvoyer un message de réponse de mise à jour de cellule au terminal ; ou
recevoir, par la première station de base, un message de reprise RRC envoyé par le terminal et renvoyer un message de réponse de reprise RRC au terminal.

6. Procédé selon la revendication 4 ou 5, le procédé comprenant en outre, après la détermination, par la première station de base, du fait que le terminal doit réaliser un processus de resélection de cellule d'une seconde station de base à la première station de base et avant le renvoi au terminal d'un acquittement pour le premier message de demande, l'étape consistant à :
notifier, par la première station de base à la seconde station de base, un message de changement de localisation de terminal et recevoir un message de réponse qui transporte une information concernant un temporisateur et qui est envoyé par la seconde station de base ; et
le renvoi au terminal, par la première station de base, d'un acquittement pour le premier message de réponse comprenant l'étape consistant à :
ajouter, par la première station de base, l'information concernant le temporisateur à l'acquittement pour le premier message de demande et renvoyer l'acquittement au terminal, l'information concernant le temporisateur étant utilisée pour donner l'instruction au terminal de libérer, quand le temporisateur expire, un contexte d'une relation de connexion entre le terminal et la seconde station de base et de commuter le premier mode connecté en le second mode connecté.

7. Procédé selon la revendication 6, dans lequel la notification, par la première station de base à la seconde station de base, d'un message de changement de localisation de terminal et la réception d'un message de réponse qui transporte une information concernant un temporisateur et qui est envoyé par la seconde station de base comprennent l'étape consistant à :
s'il n'existe aucune interface directe entre la première station de base et la seconde station de base, notifier, par la première station de base à la seconde station de base, le message de changement de localisation de terminal au moyen d'un réseau central, et recevoir le message de réponse qui transporte l'information concernant le temporisateur et qui est envoyé par la seconde station de base au moyen du réseau central.

8. Procédé de resélection de cellule inter-RAT, dans lequel une première station de base est localisée dans un premier système à technologie d'accès radio (RAT), une seconde station de base est localisée dans un second système RAT, un terminal est connecté à la seconde station de base, un mode connecté du terminal est un premier mode connecté, le premier système RAT ne prend pas en charge le premier mode connecté du terminal et prend en charge un second mode connecté du terminal ; le premier système RAT étant le système 4,5G/4G, le second système RAT étant le système 5G ; le premier mode connecté étant un mode à conservation d'énergie (ECO) et, dans le mode ECO, une connexion de plan de données et une connexion de plan de contrôle entre un côté réseau d'accès radio (RAN) et un côté réseau central (CN) étant conservées ; le second mode connecté étant un mode d'inactivité ; et le procédé comprenant les étapes consistant à :
recevoir (203), par la seconde station de base, une indication de mise à jour de localisation de terminal envoyée par la première station de base, l'indication de mise à jour de localisation de terminal étant utilisée pour indiquer que le terminal doit réaliser un processus de resélection de cellule de la seconde station de base à la première station de base ;
renvoyer (204), par la seconde station de base à la première station de base, un message de réponse pour l'indication de mise à jour de localisation de terminal et démarrer un premier temporisateur ; et
donner l'instruction (204a), par la seconde station de base quand le premier temporisateur expire, à un réseau central de libérer une porteuse du terminal,
le message de réponse comprenant une information concernant un second temporisateur, une durée d'expiration du second temporisateur étant déterminée par une durée d'expiration du premier temporisateur, et le second temporisateur étant configuré pour donner l'instruction au terminal de libérer, quand le second temporisateur expire, un contexte d'une relation de connexion entre le terminal et la seconde station de base et de commuter le premier mode connecté en le second mode connecté.

9. Procédé selon la revendication 8, le procédé comprenant en outre l'étape consistant à : si la seconde station de base reçoit un message de demande de connexion du terminal quand le premier temporisateur n'expire pas, déterminer, sur la base d'une information d'indication de cause transportée dans le message de demande de connexion, que le terminal resélectionne, quand le second temporisateur n'expire pas, la seconde station de base pour s'y connecter, de sorte que la seconde station de base renvoie au terminal un message de réponse pour le message de demande de connexion pour indiquer que le terminal est dans le premier mode connecté.

10. Terminal, dans lequel une première station de base est localisée dans un premier système à technologie d'accès radio (RAT), la seconde station de base est localisée dans un second système RAT, le terminal est dans un premier mode connecté quand il se connecte à la seconde station de base, et le premier système RAT ne prend pas en charge le premier mode connecté ; le premier système RAT étant le système 4,5G/4G, le second système RAT étant le système 5G ; le premier mode connecté étant un mode à conservation d'énergie (ECO) et, dans le mode ECO, une connexion de plan de données et une connexion de plan de contrôle entre un côté réseau d'accès radio (RAN) et un côté réseau central (CN) étant conservées ; le second mode connecté étant un mode d'inactivité ; et le terminal comprenant : un émetteur-récepteur, un processeur et une mémoire, la mémoire étant configurée pour stocker un groupe d'instructions et le processeur étant configuré pour appeler les instructions stockées dans la mémoire pour réaliser les opérations suivantes :
envoyer, au moyen de l'émetteur-récepteur, un premier message de demande à la première station de base, le premier message de demande transportant une première information d'indication de cause et la première information d'indication de cause indiquant que le terminal doit réaliser un processus de resélection de cellule de la seconde station de base à la première station de base ;
après l'envoi du premier message de demande au moyen de l'unité d'envoi, recevoir, au moyen de l'émetteur-récepteur, un acquittement renvoyé par la première station de base pour le premier message de demande ; et
commuter le premier mode connecté en un second mode connecté sur la base de l'acquittement reçu, le premier système RAT prenant en charge le second mode connecté.

11. Procédé ou terminal selon l'une quelconque des revendications 1, 2 et 10, dans lequel le premier message de demande est un message de demande de connexion de contrôle des ressources radio (RRC) et l'acquittement est un message de rejet de connexion RRC ; ou
le premier message de demande est un message de demande de mise à jour de cellule et l'acquittement est un message de réponse de mise à jour de cellule ; ou
le premier message de demande est un message de reprise de connexion RRC et l'acquittement est un message de réponse de reprise de connexion RRC.

12. Procédé ou terminal selon l'une quelconque des revendications 1 à 3 et 10 à 11, dans lequel le premier message de demande transporte en outre une information d'indication de zone de suivi (TA) et l'information d'indication TA est utilisée pour indiquer si la première station de base doit déclencher un processus de mise à jour TA.

13. Dispositif côté réseau, le dispositif côté réseau étant une première station de base, la première station de base étant localisée dans un premier système à technologie d'accès radio RAT, la seconde station de base étant localisée dans un second système RAT, le terminal étant dans un premier mode connecté quand il se connecte à la seconde station de base, et le premier système RAT ne prenant pas en charge le premier mode connecté ; le premier système RAT étant le système 4,5G/4G, le second système RAT étant le système 5G ; le premier mode connecté étant un mode à conservation d'énergie (ECO) et, dans le mode ECO, une connexion de plan de données et une connexion de plan de contrôle entre un côté réseau d'accès radio (RAN) et un côté réseau central (CN) étant conservées ; le second mode connecté étant un mode d'inactivité ; et le dispositif côté réseau comprenant : un émetteur-récepteur, un processeur et une mémoire, la mémoire étant configurée pour stocker un groupe d'instructions et le processeur étant configuré pour appeler les instructions stockées dans la mémoire pour réaliser les opérations suivantes :
recevoir, au moyen de l'émetteur-récepteur, un premier message de demande envoyé par le terminal ;
déterminer, sur la base d'une première information d'indication de cause transportée dans le premier message de demande reçu, que le terminal doit réaliser un processus de resélection de cellule de la seconde station de base à la première station de base ; et
renvoyer au terminal un acquittement pour le premier message de demande au moyen de l'émetteur-récepteur pour donner l'instruction au terminal de commuter le premier mode connecté en un second mode connecté, le premier système RAT prenant en charge le second mode connecté.

14. Dispositif côté réseau, le dispositif côté réseau étant une seconde station de base, une première station de base étant localisée dans un premier système à technologie d'accès radio (RAT), la seconde station de base étant localisée dans un second système RAT, un terminal étant connecté à la seconde station de base, un mode connecté du terminal étant un premier mode connecté, et le premier système RAT ne prenant pas en charge le premier mode connecté du terminal et prenant en charge un second mode connecté du terminal ; le premier système RAT étant le système 4,5G/4G, le second système RAT étant le système 5G ; le premier mode connecté étant un mode à conservation d'énergie (ECO) et, dans le mode ECO, une connexion de plan de données et une connexion de plan de contrôle entre un côté réseau d'accès radio (RAN) et un côté réseau central (CN) étant conservées ; le second mode connecté étant un mode d'inactivité ; et le dispositif côté réseau comprenant : un émetteur-récepteur, un processeur et une mémoire, la mémoire étant configurée pour stocker un groupe d'instructions et le processeur étant configuré pour appeler les instructions stockées dans la mémoire pour réaliser les opérations suivantes :
recevoir, au moyen de l'émetteur-récepteur, une indication de mise à jour de localisation de terminal envoyée par la première station de base, l'indication de mise à jour de localisation de terminal étant utilisée pour indiquer que le terminal doit réaliser un processus de resélection de cellule de la seconde station de base à la première station de base ;
après la réception de l'indication de mise à jour de localisation de terminal, renvoyer à la première station de base un message de réponse pour l'indication de mise à jour de localisation de terminal au moyen de l'émetteur-récepteur ;
après la réception de l'indication de mise à jour de localisation de terminal, démarrer un premier temporisateur ; et
quand le premier temporisateur enregistré expire, donner l'instruction à un réseau central de libérer une porteuse du terminal,
le message de réponse comprenant une information concernant un second temporisateur, une durée d'expiration du second temporisateur étant déterminée par une durée d'expiration du premier temporisateur, et le second temporisateur étant configuré pour donner l'instruction au terminal de libérer, quand le second temporisateur expire, un contexte d'une relation de connexion entre le terminal et la seconde station de base et de commuter le premier mode connecté en le second mode connecté.
